(19) Europäisches Patentamt

European Patent Office

Office européen des brevets

(11) EP 0 890 866 B1

(12) **EUROPEAN PATENT SPECIFICATION**

(45) Date of publication and mention
of the grant of the patent:
**28.04.2004 Bulletin 2004/18**

(51) Int Cl.[7]: **G02F 1/1335**, G02B 5/30,
G04G 9/00

(21) Application number: **98304542.8**

(22) Date of filing: **09.06.1998**

(54) **Electronic watch**

Elektronische Uhr

Montre électronique

(84) Designated Contracting States:
**CH DE FR GB LI**

(30) Priority: **09.06.1997 JP 15095697
04.08.1997 JP 20947397
04.08.1997 JP 20947497
24.12.1997 JP 35573397**

(43) Date of publication of application:
**13.01.1999 Bulletin 1999/02**

(73) Proprietor: **Seiko Epson Corporation
Shinjuku-ku, Tokyo 163-0811 (JP)**

(72) Inventors:
• **Arikawa, Yasuo
Suwa-shi, Nagano-ken 392-8502 (JP)**
• **Miyazawa, Eiichi
Suwa-shi, Nagano-ken 392-8502 (JP)**
• **Hirakawa, Tomoaki
Suwa-shi, Nagano-ken 392-8502 (JP)**

(74) Representative: **Sturt, Clifford Mark et al
Miller Sturt Kenyon
9 John Street
London WC1N 2ES (GB)**

(56) References cited:
**EP-A- 0 622 440         WO-A-95/17699
WO-A-95/34834        WO-A-97/01789
DE-A- 3 437 130        GB-A- 1 386 714
GB-A- 1 391 230        GB-A- 2 007 900
GB-A- 2 094 051        GB-A- 2 143 987
US-A- 3 950 078        US-A- 4 017 156
US-A- 5 418 631**

• PATENT ABSTRACTS OF JAPAN vol. 010, no.
116 (P-452), 30 April 1986 (1986-04-30) & JP 60
244935 A (SUWA SEIKOSHA KK), 4 December
1985 (1985-12-04)
• PATENT ABSTRACTS OF JAPAN vol. 1995, no.
06, 31 July 1995 (1995-07-31) -& JP 07 077688 A
(SEIKO INSTR INC), 20 March 1995 (1995-03-20)

## Description

The present invention relates to an electronic watch such as a wristwatch, a stopwatch and so forth for counting and displaying time.

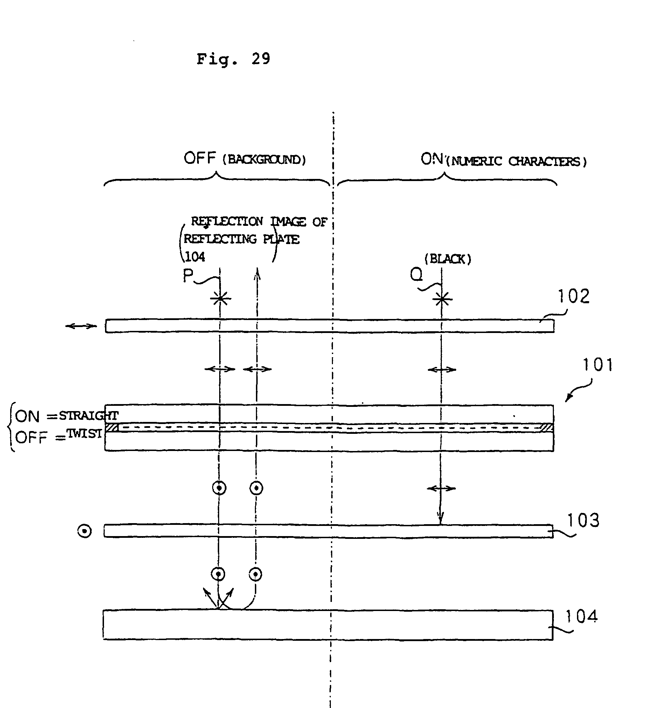

Hitherto, display devices for displaying numeric characters, characters and other information using a flat display device such as a liquid crystal display device have been widely known. As such a display device, as shown in Fig. 29 for example, one has been conventionally known in which a pair of polarisers 102 and 103 are placed on respective sides of a liquid crystal panel 101 and, further, a reflecting plate 104 is provided on the back of one polariser 103. The pair of polarisers 102 and 103 are placed so that, for example, transmitted polarisation axes thereof form a right angle.

According to this conventional display device, display of information such as numeric characters or the like is effected by applying a predetermined voltage between electrodes of the liquid crystal panel 101, and a region to which the voltage is not applied is a background of white or the like. In the drawing, the region to which the voltage is applied for displaying information is represented as "ON", and the background region to which the voltage is not applied is represented as "OFF".

In this display device, when the background is displayed (that is, the liquid crystal panel 101 is OFF), as shown by the arrow P, of external light, i.e., natural light, linearly polarised light in the direction parallel to the plane of the drawing is transmitted by the polariser 102, and the polarisation direction is twisted 90° by the liquid crystal panel 101 in the OFF state to be changed to linearly polarised light in the direction perpendicular to the plane of the drawing. This linearly polarised light is irregularly reflected from the surface of the reflecting plate 104 after being transmitted by the polariser 103 and then, a part of the irregular reflected light is displayed to the outside after being sequentially transmitted by the polariser 103, the liquid crystal panel 101 and the polariser 102, whereby that portion is recognised as a reflection image of the reflecting plate 104, normally, as a uniform white background.

Next, when information such as numeric characters is displayed (that is, the liquid crystal panel 101 is ON), as shown by the arrow Q, linearly polarised light in the direction parallel to the plane of the drawing is taken out of the external light by the polariser 102, and the linearly polarised light is transmitted by the liquid crystal panel 101. Since the liquid crystal panel is in the ON state at this time, the polarisation direction of the linearly polarised light maintains the direction parallel to the plane of the drawing without being twisted, and therefore, the linearly polarised light is absorbed by the polariser 103. Consequently, this portion is recognised from the outside as a dark colour such as black.

According to the foregoing description, in this conventional display device, information such as numeric characters is displayed in a dark colour such as black on the reflection image, which is a normally uniform white background, from the reflecting plate 104.

In the above conventional display device, since two sheets, respectively, of the polarisers 102 and 103 are provided on respective sides of the liquid crystal panel 101 and these polarisers have a function of absorbing linearly polarised light having a polarisation axis other than a predetermined polarisation axis, intensity of light guided to the outside for displaying information such as a background colour and numeric characters and so forth is attenuated greatly and therefore, there is a problem in that information such as numeric characters and the background are dark and hard to view.

In addition, in the conventional display device since the background is dark, even if various colours, patterns and other designs are added to the background, the patterns and so forth cannot be clearly recognised and therefore, almost all of the backgrounds are displayed only in a single colour such as white in the conventional display device.

Display devices comprising reflective polarizers to enhance brightness are known from WO 97/01789 and US 4 017 156.

The present invention is made in consideration of the above problems in the conventional display device, and its first object is to enable both information such as numeric characters or the like and a background to be displayed in a remarkably bright and easy-to-see state, and to facilitate attracting a viewer's interest by varying the background to provide a variety of information to the viewer.

Incidentally, as a conventional electronic watch, a device has also been known having a structure such that a backlight is provided in place of a light-reflecting plate. According to the thus structured electronic watch, one of two forms can be selected to effect display: a form for effecting display using the surface of the backlight as a light-reflecting layer, and a form for effecting display using emitted light from the backlight. Usually, a reflection-type display form is selected during bright daytime, while a display form using the backlight is selected during dark night-time.

In the above conventional electronic watch, however, there is a problem in that contents of the clock display surface of the electronic watch cannot be viewed under a dark environment such as night-time and the like.

In addition, according to the above conventional electronic watch using the backlight, the backlight is large in shape and a power source is required, so that there is a problem in that the electronic watch becomes large in shape causing inconvenience in handling and an increase in cost.

The present invention is made in consideration of the above problems in the conventional electronic watch, and its second object is, in addition to achievement of the first object, that is, in addition to achievement of the object to display both information such as numeric characters and the background in a remarkably bright and easy-to-see state and to enable the background to be varied, to provide an electronic watch which enables the contents of the clock display surface to be viewed even under a dark environment of night-time, which can reduce the shape and moreover, which is low in cost.

Incidentally, according to the above description, in a display device and an electronic watch having a structure such that a transmitted polarisation axis variable means such as the liquid crystal panel 101 is sandwiched between two sheets of the polarisation separation means, the first object is to display both information such as numeric characters and a background in a remarkably bright and easy-to-see state, and to vary the background. In addition to this fact, the present inventors have made an intensive effort to achieve a similar object by contriving the number of polarisation separation means and way of arrangement thereof, and consequently, they have considered another embodiment of the present invention. That is, a third object of the present invention is to display both information such as numeric characters and a background in a remarkably bright and easy-to-see state and to vary the background by increasing the number of polarisation separation means which are placed on either side of the transmitted polarisation means.

In the following description, only the ninth to thirteenth embodiments are embodiments of the present invention. Other embodiments are not claimed.

Embodiments will now be described in more detail and by way of further example only with reference to the accompanying drawings, in which:

Fig. 1 is a view showing schematically an embodiment of a display device.

Fig. 2 is a perspective view showing schematically an internal structure of a polarisation separation film which is used as a main part of the structure shown in Fig. 1.

Fig. 3 is a view showing schematically the operation of the polarisation separation film shown in Fig. 2.

Fig. 4 is a cross-sectional view showing the cross-sectional configuration of an embodiment of an electronic wristwatch.

Fig. 5 is a plan view showing a movement used in the electronic wristwatch of Fig. 4.

Fig. 6 is a cross-sectional view showing the cross-sectional configuration of the movement of Fig. 5.

Fig. 7 is a plan view showing an example of display form of the electronic wristwatch of Fig. 4.

Fig. 8 is a plan view showing an example of a light-reflecting layer.

Fig. 9 is a cross-sectional view showing the cross-sectional configuration of another embodiment of the display device and the electronic watch.

Fig. 10 is a view showing schematically an example of various display forms effected by using the electronic wristwatch of Fig. 9.

Fig. 11 is a view showing schematically a further embodiment of the display device.

Fig. 12 is a view showing schematically a still further embodiment of the display device.

Fig. 13 is a perspective view showing an embodiment of a light-reflecting layer and viewing angle properties thereof.

Fig. 14 is a perspective view showing schematically the viewing angle properties as viewed from another direction of the light-reflecting layer shown in Fig. 13.

Fig. 15 is a plan view showing another embodiment of the light-reflecting layer.

Fig. 16 is a plan view showing a further embodiment of the light-reflecting layer.

Fig. 17 is a cross-sectional view showing the cross-sectional configuration taken along the line V-V of Fig. 16.

Fig. 18 is a cross-sectional view showing a still further embodiment of the light-reflecting layer.

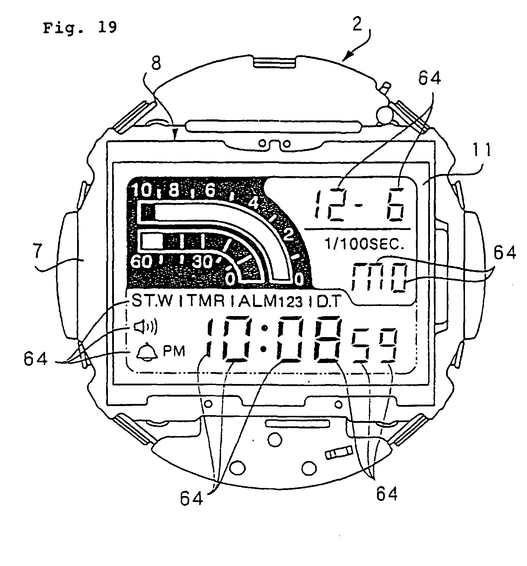

Fig. 19 is a plan view showing an example of a movement used in the electronic watch.

Fig. 20 is a view showing schematically a further embodiment of the display device used in the electronic watch.

Fig. 21 is a view for explaining a principle of an example of a liquid crystal display device, which is a major component used in the electronic watch according to the present invention.

Fig. 22 is a view for explaining a principle of another example of the liquid crystal display device, which is a major component used in the electronic watch according to the present invention.

Fig. 23 is a front view showing an embodiment of the electronic watch according to the present invention.

Fig. 24 is a cross-sectional view showing a major part of an internal structure of the electronic watch of Fig. 23.

Fig. 25 is a perspective view showing schematically an example of a polarisation separator, which is a major component used in the electronic watch according to the present invention.

Fig. 26 is a view showing schematically the cross-sectional configuration of an embodiment of a liquid crystal display device, which is a major component used in the electronic watch according to the present invention.

Fig. 27 is a view showing schematically the cross-sectional configuration of another embodiment of the liquid crystal display device, which is a major component used in the electronic watch according to the present invention.

Fig. 28 is a view showing schematically the cross-sectional configuration of a further embodiment of the liquid crystal display device, which is a major component used in the electronic watch according to the present invention.

Fig. 29 is a view showing schematically a main part of an example of a conventional display device.

(1) An electronic watch according to the present invention is an electronic watch for counting and displaying time which includes: (a) polarisation changing means capable of variably changing the polarisation direction of transmitted light; (b) a first polarisation separation means and a second polarisation separation means placed on opposite sides of the polarisation changing means; and (c) a third polarisation separation means placed on the opposite side of the second polarisation separation means from said polarisation changing means; (d) wherein the first polarisation separation means has first and second surfaces and can transmit light linearly polarised in a first direction and incident on the first surface to the second surface, and which can transmit light linearly polarised in the first direction and incident on the second surface to the first surface; (e) wherein said second polarisation separation means has third and fourth surfaces and can transmit light linearly polarised in a second direction and incident on the third surface to the fourth surface; and reflect light linearly polarised in a third direction perpendicular to said second direction and having a wavelength in a first wavelength region and incident on the third surface; and transmit light linearly polarised in said third direction and having a wavelength in a second wavelength region and incident on the third surface to the fourth surface; (f) wherein the third polarisation separation means has fifth and sixth surfaces and can transmit light linearly polarised in a fourth direction and incident on the fifth surface to the sixth surface; and reflect light linearly polarised in a fifth direction perpendicular to the fourth direction and having a wavelength in a third wavelength region and incident on the fifth surfacel; and transmit light linearly polarised in the fifth direction and having a wavelength in a fourth wavelength region and incident on the fifth surface to the sixth surface; (g) wherein the third and fourth directions are parallel; and (h) wherein either the third surface is adjacent to the polarization changing means and the fifth surface is adjacent to the second polarization seperation means, or the fourth surfaces is adjacent to the polarization changing means and the sixth surface is adjacent to the second polarization seperation means.

According to this electronic watch, two display states of the first display state and the second display state can be obtained in accordance with a state of the transmitted polarisation axis of the transmitted polarisation axis variable means. Since a display colour of the first display state and a display colour of the second display state are different from each other, a watch display can be effected by these two colours. In addition, both the display states are the display states due to light reflected from the polarisation separation means, so that remarkably bright display can be obtained as compared with a display element of a conventional system such that polarised light is transmitted by two sheets of polarisers each having a structure for separating polarised light by light absorption.

(2) In the electronic watch described in the above (1), the polarisation changing means may include a liquid crystal display device.

(3) In addition, the liquid crystal display device may include a TN liquid crystal device, an STN liquid crystal device, or an ECB liquid crystal device. Incidentally, the STN liquid crystal device may include an STN liquid crystal device using colour compensating optical anisotropic body.

(4) In the electronic watch described in the above (1) to (3), the first polarisation separation means may include a polariser.

(5) In the electronic watch described in the above (1) to (4), an angle formed by the second direction and the fourth direction is 45° to 90°.

(6) In the electronic watch described in the above (1) to (4), an angle formed by said second direction and said fourth direction is 60° to 90°.

(7) In the electronic watch described in the above (1) to (4), an angle formed by said second direction and said fourth direction is 75° to 90°.

(8) In the electronic watch described in the above (1) to (7), light-diffusing means may further be provided. This allows a watch display state to be changed into a non-mirror surface state.

(9) In the electronic watch described in the above (1) to (8), light-absorbing means may be further provided.

(10) In the electronic watch described in the above (1) to (8), a light source may be further provided.

(11) In the electronic watch described in the above (1) to (10), the second polarisation separation means may be a laminated product in which a plurality of layers are laminated by being adhered to each other, and a refractive index of the plurality of layers may be equal in a sixth direction between layers adjacent to each other, and may be different in a seventh direction perpendicular to the sixth direction.

(12) In the electronic watch described in the above (1) to (11), the third polarisation separation means may be a laminated product in which a plurality of layers are laminated by being adhered to each other, and a refractive index of the plurality of layers may be equal in an eighth direction between layers adjacent to each other, and may be different in a ninth direction perpendicular to the eighth direction.

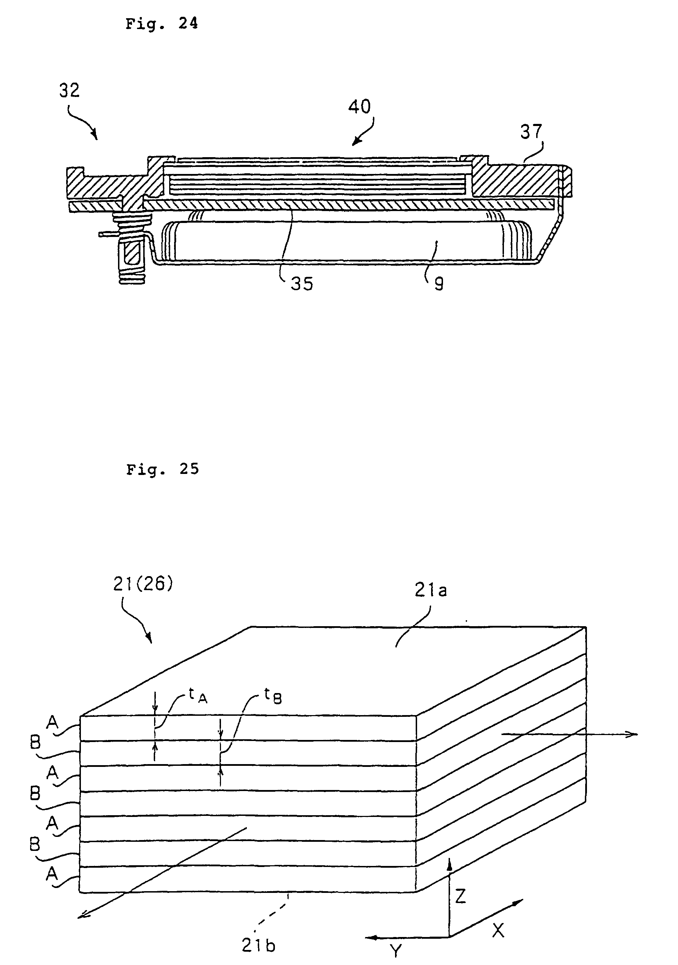

As the polarisation separation means described in the above (11) and (12), for example, a polarisation separator 21 of a laminate structure as shown schematically in Fig. 25 may employed. A functional principle of the polarisation separator 21 will be described below.

The polarisation separator shown herein has a structure of a plurality of layers formed by alternately laminating two different layers A and B. The refractive index $n_{AX}$ in the X direction of layers A and the refractive index $n_{AY}$ in the Y direction are different from each other, i.e., $n_{AX} \neq n_{AY}$. In addition, the refractive index $n_{BX}$ in the X direction of layers B and the refractive index $n_{BY}$ in the Y direction are equal to each other, i.e., $n_{BX} = n_{BY}$.

Therefore, if light is incident on the top surface 21a of the polarisation separator 21 from the direction perpendicular to the surface, of the light, linearly polarised light in the Y direction is transmitted by the polarisation separator 21 to be emitted from the bottom surface 21b as linearly polarised light in the Y direction. Conversely, if light is incident on the bottom surface 21b of the polarisation separator 21 from the direction perpendicular to the surface, of the light, linearly polarised light in the Y direction transmitted by the polarisation separator 21 to be emitted from the top surface 21a as linearly polarised light in the Y direction. Here, the Y direction to be transmitted is called a transmission axis.

On the other hand, if the thickness of the layer A in the Z direction is taken as $t_A$, the thickness of the layer B in the Z direction is taken as $t_B$, and the wavelength of the incident light is taken as $\lambda$, by setting optical characteristics to satisfy the following expression,

$$t_A \times n_{AX} + t_B \times n_{BX} = \lambda/2 \qquad (1)$$

when light of wavelength $\lambda$ is incident on the top surface 21a of the polarisation separator 21 from the direction perpendicular to the surface, of the light, linearly polarised light in the X direction is reflected by the polarisation separator 21 as linearly polarised light in the X direction. In addition, the linearly polarised light which is the light of wavelength $\lambda$ and incident on the bottom surface 21b of the polarisation separator 21 in the direction perpendicular to the surface is reflected by the polarisation separator 21 as linearly polarised light in the X direction. Here, the X direction to be reflected is called a reflection axis.

By variously changing the thickness of the layer A in the Z direction and the thickness of the layer B in the Z direction to allow the above expression (1) to be held over a certain wavelength range of visible light, only light in a certain wavelength region ($\Delta\lambda$) can be reflected and light in other wavelength region ($-\Delta\lambda$) can be transmitted. That is, a linearly polarised light component in the Y direction is transmitted as linearly polarised light in the Y direction, light which is a linearly polarised light component in the X direction and in a certain wavelength ($\Delta\lambda$) is reflected as linearly polarised light in the X direction, and light, which is a linearly polarised light component in the X direction and in other wavelength region ($-\Delta\lambda$) is transmitted as linearly polarised light in the X direction.

[Description of the Embodiments]

(First Embodiment)

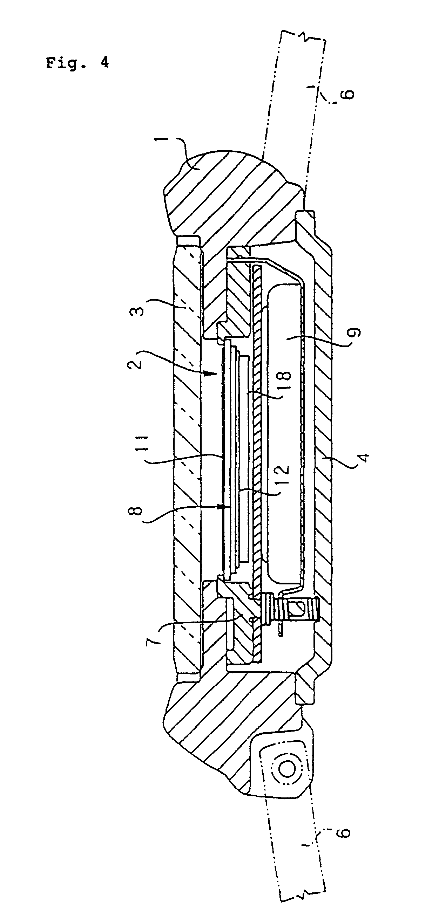

Fig. 4 shows the cross-sectional configuration of an embodiment of an electronic watch using a display device as a display section. This electronic watch is a wristwatch which is composed of, for example, a plastic casing 1, a movement 2 stored in the casing 1, a glass plate 3 which is fixed to the casing 1 and located on the movement 2, and a rear cover 4 for fixing the movement 2. Numeral 6 denotes a wristband.

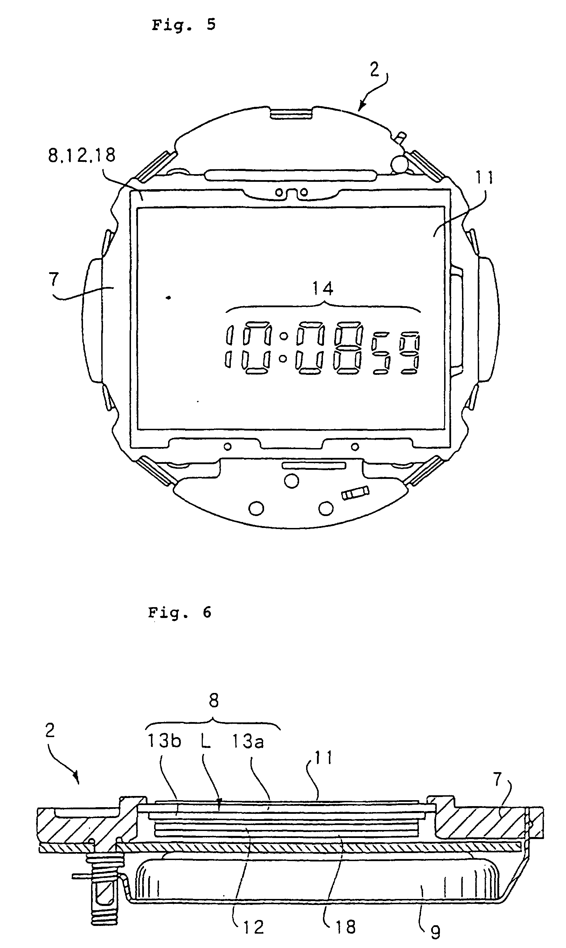

The movement 2 includes, as shown in Fig. 6, a panel frame 7, a liquid crystal panel 8 as a transmitted polarisation axis variable means which is supported by the panel frame 7, a polariser 11 as a first polarisation separation means which is adhered on the outer surface (the upper surface of the drawing) of the liquid crystal panel 8, a polarisation separation film 12 as a second polarisation separation means which is placed on the opposite side of the polariser 11 across the liquid crystal panel 8, a backlight 18 disposed on the bottom surface side of the polarisation separation film 12, and a battery 9.

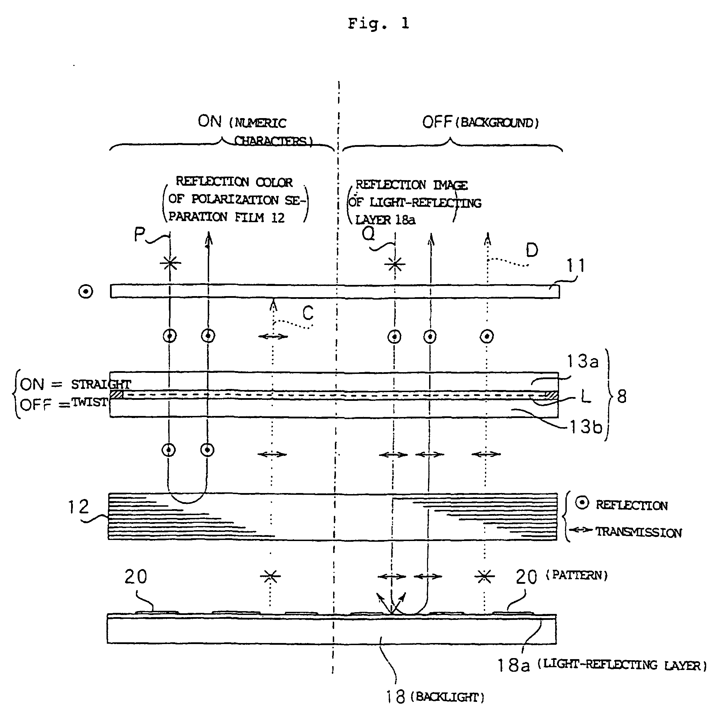

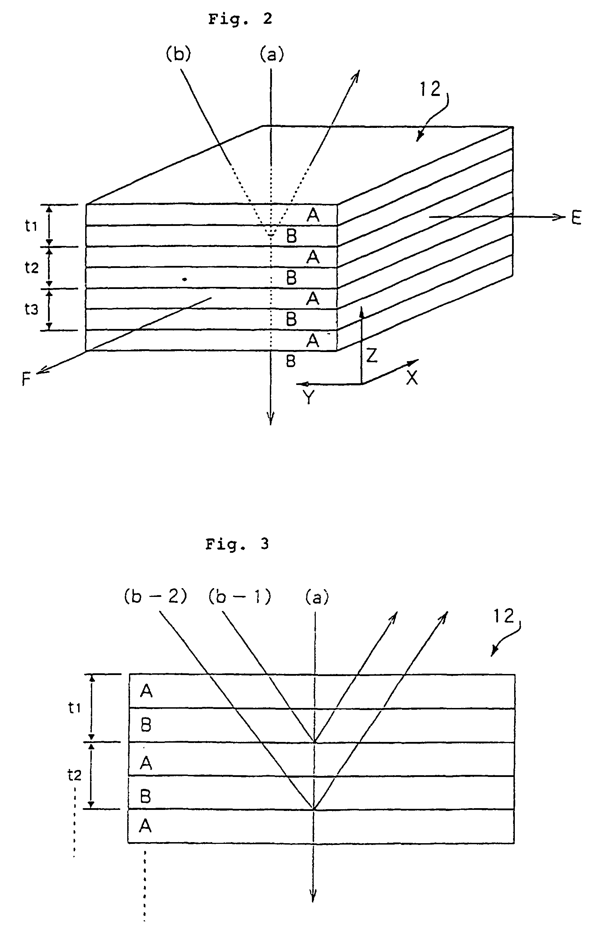

The polariser 11 is formed of a normal polarisation plate, and acts so as to transmit linearly polarised light facing one direction and so as not to transmit other polarised light by absorbing and scattering and so forth. According to this embodiment, in Fig. 1, the position of the polariser 11 is set so that the polarisation axis of the polariser 11 faces the direction perpendicular to the plane of the drawing. In addition, the polarisation separation film 12 is composed of, as shown in Fig. 2, a polarisation separation film having a structure such that multiple thin films are laminated. As described earlier, the polarisation separation film 12 acts so as to transmit linearly polarised light facing one direction and to reflect other linearly polarised light rather than to absorb, in particular, acts so as to entirely reflect linearly polarised light in the direction perpendicular to the polarisation axis.

Incidentally, in the polarisation separation film 12 of this embodiment, the thicknesses t1, t2, t3 , ... ... (see Fig. 2) of respective layers are set so that the light of all wavelengths in the visible light region can be reflected. Incidentally, the plane of the polarisation separation film 12 opposing the liquid crystal panel 8 may be a smooth plane for mirror-reflecting light, or may be a light-scattering layer, i.e., a light-diffusing layer. In the case of the smooth plane, a reflected image from the polarisation separation film 12 is a mirror reflection image. In the case of the light-diffusing layer, a reflected image from the polarisation separation film 12 has a single (normally, white) background colour with no pattern.

If a colour layer is provided on the surface of the polarisation separation film 12, the image can be suitably coloured.

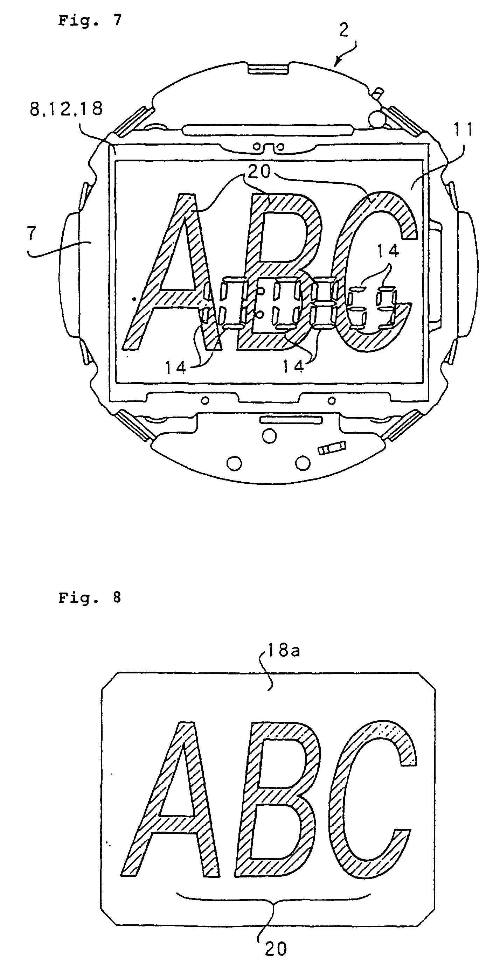

The backlight 18 of Fig. 6 is composed of, for example, an EL, which is a plane light emitting element. The surface of the backlight 18 is, as shown in Fig. 1, a light-reflecting layer 18a for irregularly reflecting light. In the case of this embodiment, the light-reflecting layer 18a is formed by, as shown in Fig. 8, providing a pattern 20 on a white background by printing. Although a suitable mark such as a logo and a trademark, a suitable character and other various patterns may be considered as the pattern 20, the characters "ABC" shall be drawn in this embodiment.

In Fig. 6, the liquid crystal panel 8 has a pair of transparent glass substrates 13a and 13b opposing each other, and liquid crystal, such as TN liquid crystal L, is sealed in a gap formed between the glass substrates, a so-called cell gap. A plurality of transparent electrodes 14 for displaying information such as numeric characters, characters or the like are formed on the glass substrates 13a and 13b, as shown in Fig. 5. In this embodiment, a transparent electrode divided into seven segments is employed as a transparent electrode for displaying a one-digit numeric character.

A predetermined voltage can be applied between a pair of segment transparent electrodes 14 opposing to each other which are formed on the pair of glass substrates 13a and 13b, respectively, and according to whether the voltage is applied (ON) or the voltage is not applied (OFF), the alignment of the liquid crystal L can be set to one of the two states. The liquid crystal of this embodiment is set so that the polarisation axis of the linearly polarised light passing through the liquid crystal is not changed when it is in the ON state, while the polarisation axis of the polarised light passing through the liquid crystal is twisted only 90° when it is in the OFF state.

Hereinafter, the operation of an electronic wristwatch constructed as described above will be described. This wristwatch has two kinds of light source forms: a light source form utilising emission of the backlight 18, and a light source form utilising external natural light without utilising the emission of the backlight 18. In addition, when the background is to be displayed on the display surface of the wristwatch, the liquid crystal panel 8 of that region is set to the OFF state, and when information such as numeric characters or the like is to be displayed on the display surface of the wristwatch, the liquid crystal panel 8 of that region is set to the ON state. Hereinafter, these various cases will be described individually.

(When external natural light is used)

First, when display is effected using the external natural light, especially when the background is displayed, the liquid crystal panel 8 is set to the OFF state in Fig. 1. Thereupon, as shown by the arrow Q of the drawing, of the external light, i.e., natural light, linearly polarised light in the direction perpendicular to the plane of the drawing is transmitted by the polariser 11, and the polarisation direction is twisted 90° by the liquid crystal panel 8 in the OFF state to become linearly polarised light in the direction parallel to the plane of the drawing.

This linearly polarised light is transmitted by the polarisation separation film 12 to reach the light-reflecting layer 18a and is reflected therefrom. The reflected light is transmitted by the polarisation separation film 12, the liquid crystal panel 8 and the polariser 11 to be recognised by a viewer. Since the light-reflecting layer 18a has the pattern 20, the background on which the pattern 20 is drawn is recognised from the outside, as shown in Fig. 7. The background colour around the pattern 20 should be relatively dark colour, such as grey, in order to distinguish the information such as characters or the like. Incidentally, in order to obtain such a relatively dark background colour, the colour of the ground of the light-reflecting layer 18a is coloured relatively dark in advance.

In Fig. 1, the light irregularly reflected from the light-scattering layer 18a includes a component for shifting the polarisation axis thereof, and the optical component is reflected from the polarisation separation film 12 to return to the light-scattering layer 18a again, and repeats the reflection until it matches the polarisation axis of the polarisation separation film 12, and then comes out upward. In contrast, according to the conventional structure using a normal polariser in place of the polarisation separation film 12, the optical component by which the polarisation axis is shifted is absorbed by the polariser and does not come out upward. In other words, according to this embodiment using the polarisation separation film 12, the light reflected from the light-scattering layer 18a can be efficiently guided to the outside, and hence the pattern 20 can be displayed in a remarkably bright and easy-to-see state.

Next, when information such as numeric characters or the like is displayed using the external natural light, the liquid crystal panel 8 is set to the ON state. Thereupon, as shown by the arrow P, linearly polarised light in the direction perpendicular to the plane of the drawing is taken out of the external light by the polariser 11, and the linearly polarised light is transmitted by the liquid crystal panel 8. Since the liquid crystal panel 8 is in the ON state at this time, the polarisation direction of the linearly polarised light is maintained in the direction perpendicular to the plane of the drawing without being twisted, and therefore, the linearly polarised light is reflected between each of the layer surfaces in the polarisation separation film 12 in response to the wavelength, and the reflected light is displayed to the outside after being sequentially transmitted by the liquid crystal panel 8 and the polariser 11. This allows a portion of a segment in the transparent electrodes 14 in Fig. 7 to be displayed by the reflection colour of the polarisation separation film 12.

According to the foregoing description, when display is effected using the external natural light, information such as numeric characters or the like displayed by the segment electrodes 14 can be recognised on a background of grey or the like on which the pattern 20 is drawn. In the conventional display form, only information such as numeric characters or the like is displayed on a single background colour such as white, so that the display form is dull. In this embodiment, however, the pattern 20 can be drawn on the background and varied, so that various information can be provided to the viewer and the viewer's interest can be strongly attracted.

(When the backlight 18 is used)

Next, when display is effected using emitted light of the backlight 18, especially when the background is displayed, the backlight 18 is lit and further, the liquid crystal panel 8 is set to the OFF state. Thereupon, as shown by the arrow D, the linearly polarised light in the direction parallel to the plane of the drawing is taken out of the emitted light i.e., natural light of the backlight 18 by the polarisation separation film 12 and further, the polarisation direction of the linearly polarised light is twisted 90° by the liquid crystal display device 8 in the OFF state to be converted into linearly polarised light in the direction perpendicular to the plane of the drawing. This linearly polarised light is transmitted by the polariser 11 to be emitted to the outside, and is recognised as the background. In other words, the background having the pattern 20 displayed on the emission colour of the backlight 18 is recognised.

Next, when information such as numeric characters or the like is displayed using the emitted light of the backlight 18, the backlight 18 is lit and further, the liquid crystal panel 8 is set to the ON state. Thereupon, as shown by the arrow C, linearly polarised light in the direction parallel to the plane of the drawing is taken out of the emitted light of the backlight 18 by the polarisation separation film 12, and the linearly polarised light is transmitted by the liquid crystal panel 8 in the ON state. Since the polarisation axis of the linearly polarised light is in the direction parallel to the plane of the drawing, it is absorbed or scattered by the polariser 11 and prevented from being emitted to the outside, and hence this portion is recognised as black from the outside.

According to the foregoing description, when effecting a display using the emitted light from the backlight 18 in the case where the external natural light is not incident because of darkness, information such as numeric characters or the like is displayed in a dark colour such as black on the background of the emitted light of the backlight 18 on which the pattern 20 is drawn.

Incidentally, the light-reflecting layer 18a of Fig. 1 may include a fluorescent material which emits fluorescence when light falls thereon. This allows the pattern 20 printed on the light-reflecting layer 18a to be clearly recognised in such a manner as to raise from the background colour emitting fluorescence, thereby making a strong impression on the viewer.

(Second Embodiment)

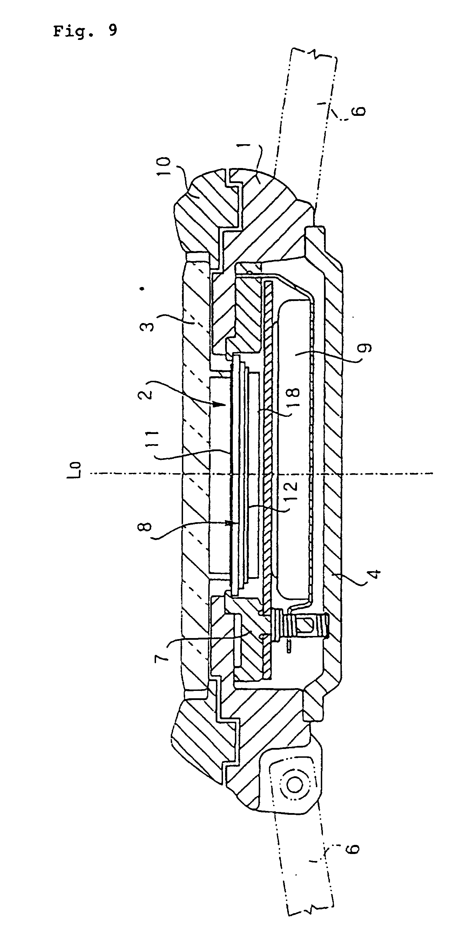

Fig. 9 shows another embodiment of the display device and the electronic watch. This embodiment differs from the previous embodiment shown in Fig. 4 in that a rotary ring 10 rotatable in relation to the casing 1 is provided on the casing 1, and the glass plate 3 and the polariser 11 are integrally connected to the rotary ring 10. According to this embodiment, the viewer lifts up the rotary ring 10 with the fingers and rotates it about the centre axis L0 of the wristwatch, whereby the polariser 11 can be rotated about the centre axis L0. If the polariser 11 is rotated in this way, since the polarisation axis of the polariser 11 is changed from the direction perpendicular to the plane of the drawing in Fig. 1, the transmission characteristics of the linearly polarised light due to the polariser 11 are changed, so that display contents to be displayed to the outside are changed variously and the viewer's interest can be strongly attracted.

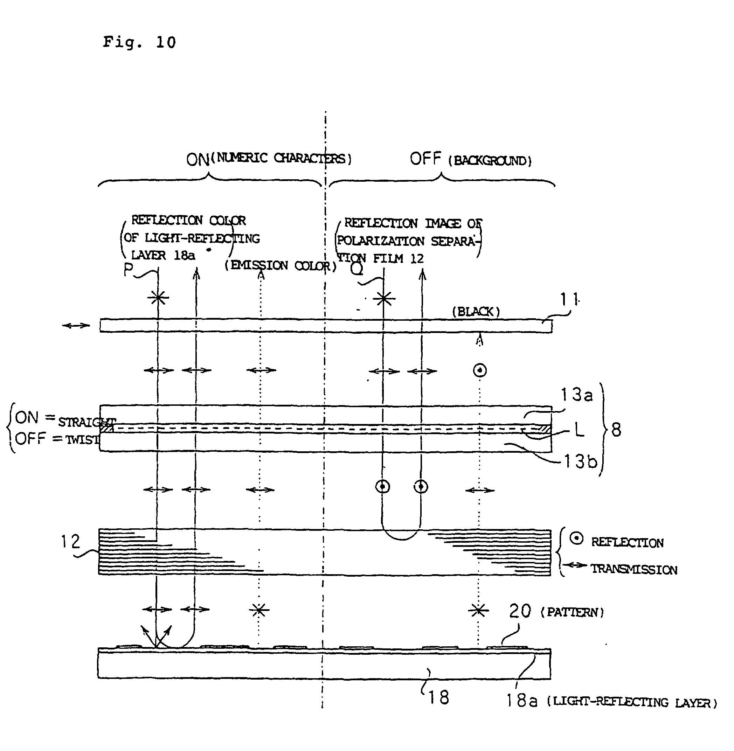

For example, if the polariser 11 is rotated 90° from the state of Fig. 1, the transmitted polarisation axis of the polariser 11 can be changed in the direction parallel to the plane of the drawing, as shown in Fig. 10. Thus, when display is effected using the external natural light, the background is displayed by the reflection image of the polarisation separation film 12, as shown by the arrow Q, while information such as numeric characters or the like is displayed by the reflection colour from the light-reflecting layer 18a. In other words, in this case, the background is not displayed using the light-reflecting layer 18a, so that the pattern 20 is not displayed on the background, and information such as numeric characters or the like is displayed by the segment electrodes 14 on the background of a single colour with no pattern.

In other words, according to this embodiment, by rotating the rotary ring 10, the display form of the electronic watch can be freely changed between the form for displaying simultaneously both the pattern 20 and information such as numeric characters or the like, as shown in Fig. 7, and the form for displaying only information such as numeric characters or the like by turning off the pattern 20, as shown in Fig. 5.

Incidentally, in the case of Fig. 7, the background including the pattern 20 is displayed by the reflection image (the arrow Q of Fig. 1) of the light-reflecting layer 18a, and information such as numeric characters or the like due to the segment electrodes 14 is displayed by the reflection colour (the arrow P of Fig. 1) of the polarisation separation film 12. On the other hand, in the case of Fig. 5, the background is displayed by the reflection image (the arrow Q of Fig. 10) of the polarisation separation film 12, and information such as numeric characters or the like is displayed by the reflected colour (the arrow P of Fig. 10) of the light-reflecting layer 18a.

In other words, when the display form is changed between the state of Fig. 5 and the state of Fig. 7 by rotating the rotary ring 10, the pattern 20 can be turned on and turned off, and at the same time, the display colours of the background and information such as numeric characters or the like can be changed. Therefore, a very exciting display to the viewer can be provided.

(Third Embodiment)

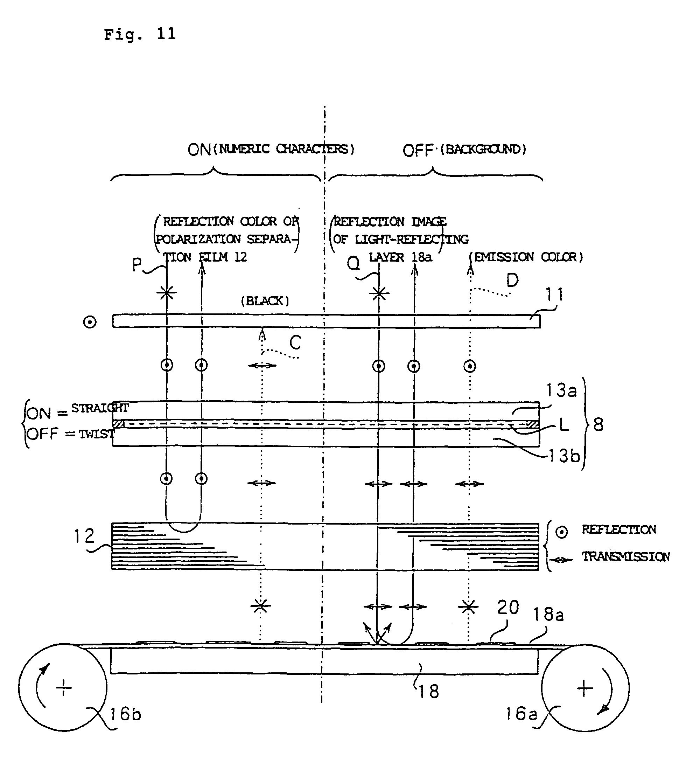

Fig. 11 shows a further embodiment of the display device and the electronic watch. This embodiment differs from the previous embodiment shown in Fig. 1 in that a pair of take-up reels 16a and 16b are provided on both sides of the backlight 18, and the light-reflecting layer 18a in continuous form is looped over the reels. In the longitudinal direction of the light-reflecting layer 18a, instead of the pattern 20 of "ABC" shown in Fig. 8, another pattern consisting of a suitable logo, a mark, a character and so forth is printed. Therefore, if the light-reflecting layer 18a is taken up by one of the reels 16a and 16b, and the light-reflecting layer 18a is taken out by the other reel simultaneously, various patterns can be carried onto a portion corresponding to the backlight 18, thereby providing various background patterns to the viewer. Incidentally, the rotational drive of the reels 16a and 16b can be effected manually by the viewer from the outside, or can be effected automatically using a drive source provided in the wristwatch.

(Other Embodiments)

For example, although the display device is applied to the display section of an electronic wristwatch, the display device can be applied to all types of electronic equipment. In addition, a wristwatch is shown in the above-described embodiments, it is a matter of course that an electronic watch can have another structure, such as a stopwatch and so forth.

In addition, although a liquid crystal panel using TN liquid crystal is employed as the transmitted polarisation axis variable means capable of selecting one of the states of changing and non-changing of the polarisation axis of the transmitted polarised light in the above-described embodiments, a liquid crystal panel using STN liquid crystal or ECB liquid crystal can be employed in place of this.

In addition, a multilayer structure, in which a plurality of thin films are laminated as shown in Fig. 2, is employed as the second polarisation separation means for effecting the action of transmitting linearly polarised light of one direction and of reflecting other linearly polarised light. However, in place of this, (1) a polarisation separation plate having a structure such that a (1/4) λ film is provided on both sides or on one side of a cholesteric liquid crystal layer, (2) a polarisation separation member (pages 427 to 429 of SID 92 DIGEST) having a structure for separating into reflected polarised light and transmitted polarised light utilising Brewster angle, or (3) a polarisation separation member utilising a hologram may be employed.

(Fourth Embodiment)

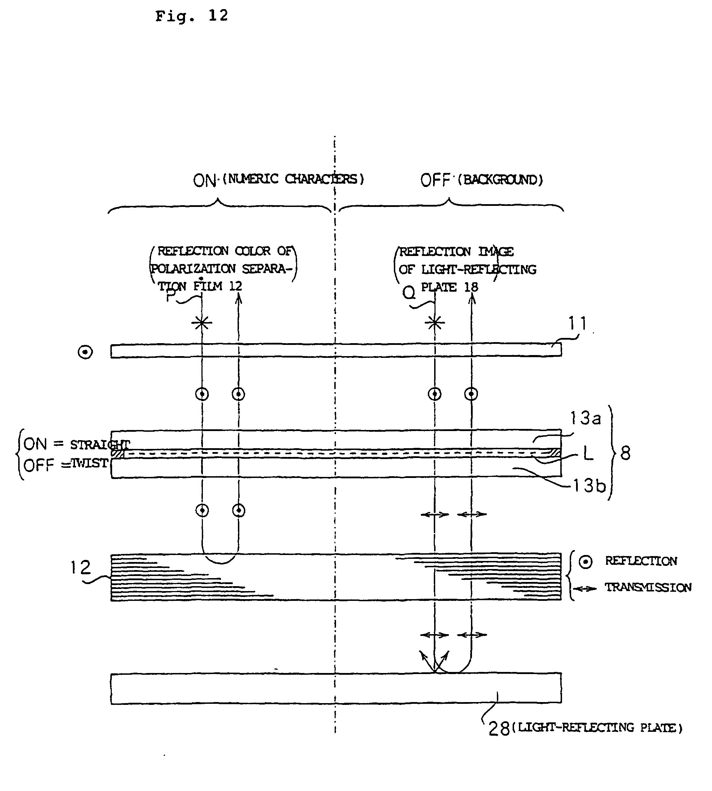

Fig. 12 shows the cross-sectional configuration of an embodiment of the display device. If this display device is used as the display section of the electronic watch shown in Fig. 4, the electronic watch can be constructed. Since the structure of the electronic watch has already been described using Fig. 2, Fig. 3, Fig. 5 and Fig. 6, a description thereof will be omitted. In addition, since the components in Fig. 12 indicated by the same numerals as those of the components in Fig. 1 are the components having the same functions, a description thereof will be omitted.

In this embodiment, as compared with the embodiment of Fig. 1, an alteration is added to the light-reflecting plate 28. That is, the light-reflecting plate 28 is formed by a hologram sheet. As is generally known, if an angle for viewing the hologram sheet is changed, the colour of the reflected light from the hologram sheet is changed corresponding thereto.

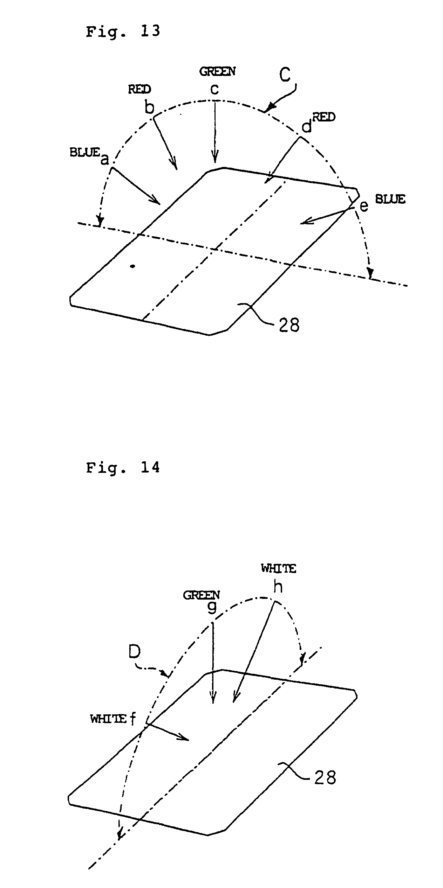

For example, as shown by the arrow C in Fig. 13, if an angle for viewing the hologram sheet 28 is gradually changed in a minor axis direction in a manner of a-b-c-d-e, the whole of the hologram sheet 28 changes in colour continuously for the viewer in a manner of, for example, blue-red-green-red-blue. In addition, as shown by the arrow D in Fig. 14, if the angle for viewing the hologram sheet 28 is gradually changed in a major axis direction in a manner of f-g-h, the whole of the hologram sheet 28 changes in colour continuously for the viewer in a manner of, for example, white-green-white.

Hereinafter, the operation of the display device constructed as described above and the electronic wristwatch using the same will be described.

First, when the background is displayed, the liquid crystal panel 8 is set to the OFF state in Fig. 12. Thereupon, as shown by the arrow Q in the drawing, of the external light, or the natural light, linearly polarised light in the direction perpendicular to the plane of the drawing is transmitted by the polariser 11, and the polarisation direction is twisted 90° by the liquid crystal panel 8 in the OFF state to become linearly polarised light in the direction parallel to the plane of the drawing.

The linearly polarised light is transmitted by the polarisation separation film 12 to reach the light-reflecting plate 28 and is reflected therefrom. The reflected light is recognised by the viewer after being transmitted by the polarisation separation film 12, the liquid crystal panel 8 and the polariser 11. Since the light-reflecting plate 28 is composed of a hologram sheet, if the viewer changes an angle for viewing the watch display from the outside, the reflection colour of the light-reflecting plate 28 is changed variously in response to the angle, as shown in Fig. 13 and Fig. 14. Therefore, the viewer will recognise the background of which the colour is variously changed in response to the angle.

Incidentally, in Fig. 12, the light irregularly reflected from the light-reflecting plate 28 includes a component for shifting the polarisation axis thereof, and the light component is reflected from the polarisation separation film 12 to return to the light-reflecting plate 28 again, and is repeatedly reflected until it matches the polarisation axis of the polarisation separation film 12, and then comes out upward. In contrast, according to the conventional construction using a normal polariser in place of the polarisation separation film 12, the light component by which the polarisation axis is shifted is absorbed by the polariser and does not come out upward. In other words, according to this embodiment using the polarisation separation film 12, the light reflected from the light-reflecting plate 28 can be efficiently guided to the outside, and hence the reflection image due to hologram properties of the light-reflecting plate 28 can be displayed in a remarkably bright and easy-to-see state.

Next, in Fig. 12, when information such as numeric characters or the like are displayed, the liquid crystal panel 8 is set to the ON state. Thereupon, as shown by the arrow P, linearly polarised light in the direction perpendicular to the plane of the drawing is taken out of the external light by the polariser 11, and the linearly polarised light is transmitted by the liquid crystal panel 8. Since the liquid crystal panel 8 is in the ON state at this time, the polarisation direction of the linearly polarised light is maintained in the direction perpendicular to the plane of the drawing without being twisted, and therefore, the linearly polarised light is reflected between each of the layer surfaces in the polarisation separation film 12 in response to the wavelength, and the reflected light is displayed to the outside after being sequentially transmitted by the liquid crystal panel 8 and the polariser 11. This allows a portion of a segment in the ON state of the transparent electrodes 14 in Fig. 5 to be displayed by the reflection colour of the polarisation separation film 12.

According to the foregoing description, when a watch display is effected using the external natural light in this embodiment, information such as numeric characters or the like displayed by the segment electrodes 14 can be recognised on the background which is changed in colour in response to the viewing angle due to the hologram properties. In the conventional display form, only information such as numeric characters or the like is displayed on a single background colour such as white, so that the display form is dull. According to this embodiment, however, the colour of the background is changed in response to the viewing angle, so that the viewer can enjoy a variety of display forms.

(Fifth Embodiment)

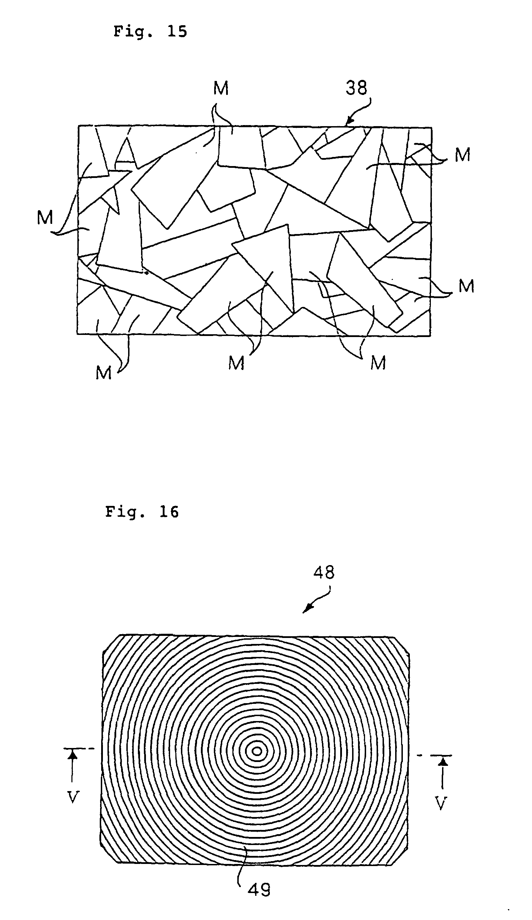

Fig. 15 shows another embodiment of the light-reflecting plate which can be used in the display device and in the electronic watch. A light-reflecting plate 38 shown herein is constituted by using the hologram sheet similar to the previous light-reflecting plate 28 shown in Fig. 13 and Fig. 14. The difference between the two is as follows. The entire surface of the light-reflecting plate 28 of Fig. 13 has a single hologram property, and therefore, when the colour of the light-reflecting plate 28 is changed in response to the viewing angle, the whole of the light-reflecting plate 28 is uniformly changed in colour.

In contrast, regarding the light-reflecting plate 38 of Fig. 15, mosaic patterns are formed on the surface thereof, and an individual mosaic pattern portion M has its own hologram property. Therefore, each mosaic pattern portion M emits reflected light of a colour in accordance with its hologram property, so that the whole of the light-reflecting plate 38 emits light in various colours in the individual mosaic pattern portion M. Then, the emission display is used as the background of the watch display. Therefore, the viewer can enjoy the variety of display forms as compared with a case of viewing a conventional background of a single colour.

In addition, if the viewer gradually changes the angle for viewing the watch display, i.e. the angle for viewing the light-reflecting plate 38, the individual mosaic pattern portion M changes the reflection colour in accordance with its own hologram property. If this is observed over the light-reflecting plate 38, the light-reflecting plate is brilliantly continuously changed in colour in the individual mosaic pattern portion M, for example, green-red,-blue-grey. Therefore, the viewer can enjoy a further variety of display forms.

(Sixth Embodiment)

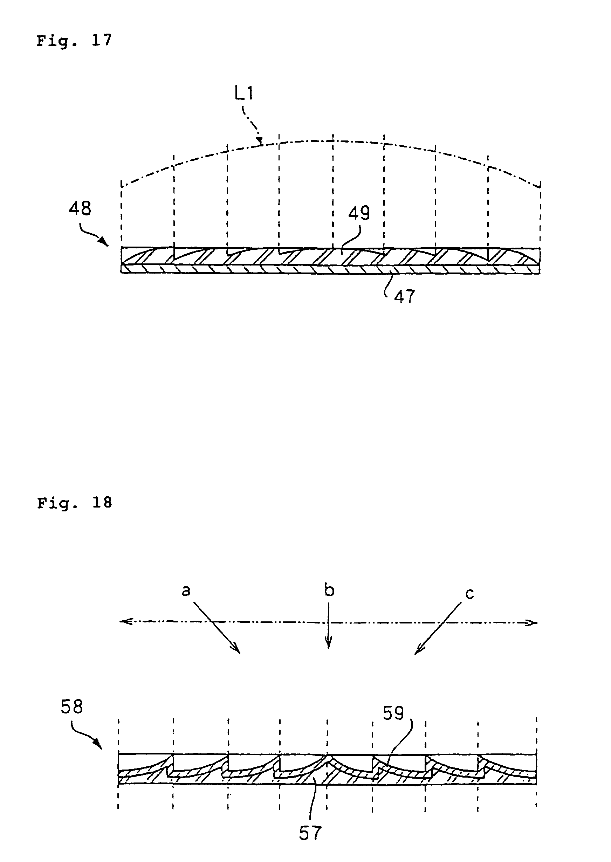

Fig. 16 shows a further embodiment of a light-reflecting plate which can be used in the display device and in the electronic watch. A light-reflecting plate 48 shown herein has a Fresnel lens 49 made of resin which is formed in a concentric pattern on the surface thereof. The Fresnel lens 49 is, as generally known and as shown in Fig. 17, formed by, for example, dividing a lens surface L of a convex lens for each concentric pattern, and by arranging them in the form of a flat surface. And, a light-reflecting layer 47 such as Al (aluminum) is adhered to the back of the Fresnel lens 49.

If the Fresnel lens 49 is formed to be colourless and transparent, the light incident on the light-reflecting plate 48 is incident on the light-reflecting layer 47 through the Fresnel lens 49, reflected therefrom and then guided to the outside through the Fresnel lens 49 again. Therefore, the viewer viewing the watch display of Fig. 5 recognises a mirror reflection image optically processed by the Fresnel lens 49 as the background of the information display such as numeric characters or the like using the segment electrodes 14. This background is changed to various states by changing the viewing angle of the watch display, so that a variety of displays can be provided to the viewer. Incidentally, if the Fresnel lens 49 is formed by suitably coloured resin, the background can be configured by a coloured reflection image, so that a further variety of background can be viewed.

(Seventh Embodiment)

Fig. 18 shows a still further embodiment of the light-reflecting plate, which can be used in the display device and in the electronic watch. A light-reflecting plate 58 shown herein can be formed into a plane state of the concentric pattern shown in Fig. 16, for example. The light-reflecting plate 58 is composed of an Al reflecting layer 57 rugged for every concentric pattern, and a colour resin layer 59 covered thereon.

According to this embodiment, if the viewing angle is continuously changed in the direction parallel to the plane of the drawing in a manner of a-b-c, or continuously changed in the direction perpendicular to the plane of the drawing by the action of the rugged shape provided on the Al reflecting layer 57, the reflected image recognised from the outside is changed in various states. For example, the changes can be recognised such that the concentric pattern of Fig. 16 can be partially clearly viewed and not, and that a strongly shining portion moves left and right, up and down, or in a circumferential direction. Thus, if the background is displayed using the light-reflecting plate 58, the appearance of the background can be changed variously in response to the change in the viewing angle direction of the viewer and hence, the watch display and so forth can be varied.

(Other Embodiments)

For example, the display device is applicable as a display section for all types of electronic equipment except the electronic wristwatch. In addition, although a liquid crystal panel using the TN liquid crystal is employed as the transmitted polarisation axis variable means capable of selecting one of the states of changing and non-changing the polarisation axis of transmitted polarised light in the above-described embodiments, a liquid crystal using an STN liquid crystal or an ECB liquid crystal can be employed in place of this.

In addition, a multilayer structure in which a plurality of thin films are laminated as shown in Fig. 2 is employed as the second polarisation separating means for effecting the action of transmitting linearly polarised light of one direction and of reflecting other linearly polarised light. However, in place of this, (1) a polarisation separation plate having a structure such that (1/4) $\lambda$ films are provided on both sides or one side of cholesteric liquid crystal layer, (2) a polarisation separation member (pages 427 to 429 of SID 92 DIGEST) having a structure for separating into reflected polarised light and transmitted polarised light utilising Brewster angle, or (3) a polarisation separation member utilising a hologram may be employed.

(Eighth Embodiment)

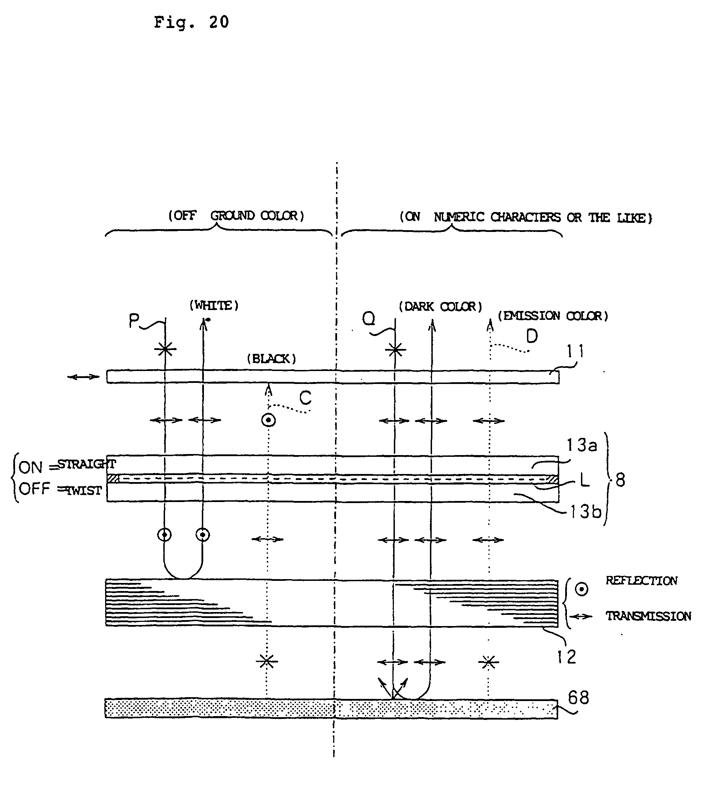

Fig. 20 schematically shows a main part of another embodiment of the electronic watch. The embodiment shown herein differs from the previous embodiments in that a reflective polarisation separation film 12 is used as the second polarisation separation means which is provided on the opposite side of the first polariser 11 across the liquid crystal panel 8. Other points are the same as those of the components of Fig. 1, and the same members are indicated by the same references.

The polarisation separation film 12, which is the same as the polarisation separation film 12 used in the display device of Fig. 1 can be used in this embodiment, and more specifically, a film of a multilayer structure shown in Fig. 2 can be used. This polarisation separation film 12 differs from a normal polariser 15 in the following point. The normal polariser absorbs linearly polarised light except the linearly polarised light capable of being transmitted, while the reflective polarisation separation film 12 reflects the linearly polarised light. This fact has already been described. Since the polarisation separation film 12 has such optical characteristics, the following display states can be realised in the embodiment of Fig. 20.

(When the light-reflecting plate 68 is used as a light reflector)

When display is effected using external natural light under a daytime bright environment, especially when the background colour is displayed, the liquid crystal panel 8 is first set to the OFF state in Fig. 20. Thereupon, as shown by the arrow P in the drawing, of the external light, i.e., natural light, linearly polarised light in the direction parallel to the plane of the drawing is transmitted by the first polariser 11, and the polarisation direction is twisted 90° by the liquid crystal panel 8 in the OFF state to become linearly polarised light in the direction perpendicular to the plane of the drawing. The linearly polarised light is reflected between layer surfaces in the polarisation separation film 12 in response to the wavelength, and the reflected light is displayed to the outside after being sequentially transmitted by the liquid crystal panel 8 and the first polariser 11. This allows the background colour to be displayed within the display surface of the wristwatch. This background colour is usually "white".

While the white background colour tends to be dark under the influence of absorption of light by the second polariser 15 in the previous embodiments, such an influence of light absorption by the polariser is eliminated in the embodiment shown in Fig. 20, so that luminance of the white background can be increased and hence, the display surface of the watch can be displayed more brightly.

Next, when information such as numeric characters or the like is displayed using the external natural light, the liquid crystal panel is set to the ON state. Thereupon, as shown by the arrow Q, linearly polarised light in the direction parallel to the plane of the drawing is taken out of the external light by the first polariser 11, and the linearly polarised light is transmitted by the liquid crystal panel 8. Since the liquid crystal panel 8 is in the ON state at this time, the polarisation direction of the linearly polarised light is maintained in the direction parallel to the plane of the drawing without being twisted and hence, the linearly polarised light is transmitted by the polarisation separation film 12 and further reflected irregularly from the surface of the light reflecting plate 68. The light returning to the side of the polariser 11 is reduced by this irregular reflection, and hence this portion is displayed from the outside as a dark colour such as grey in relation to the background, and therefore, recognised as information such as numeric characters or the like by the viewer. Of course, a high-contrast "black" can be positively produced by providing a semi-transmissive light absorber between the polarisation separation film 12 and the light-reflecting plate 68 and by positively absorbing light by the light absorber.

According to the foregoing description, when the external natural light is used, information such as numeric characters or the like can be displayed in a dark colour on the white background colour by utilising reflection characteristics of the light reflector 68. At that time, energy is accumulated in the light-accumulative luminescent layer of the light reflector 68.

(When the light-reflecting plate 68 is used as an illuminant)

When display is effected using the emitted light of the light reflector 68 under a night-time dark environment, especially when displaying the background colour, the liquid crystal panel 8 is set to the OFF state. Thereupon, as shown by the arrow C, linearly polarised light in the direction parallel to the plane of the drawing is taken out of the emitted light, i.e., natural light of the light reflector 68 by the polarisation separation film 12, and the polarisation direction of the linearly polarised light is twisted 90° by the liquid crystal panel 8 in the OFF state to be converted into linearly polarised light in the direction perpendicular to the plane of the drawing. Since the linearly polarised light is absorbed or diffused by the first polariser 11 to be prevented from being emitted to the outside, it is recognised as the "black" background colour from the outside.

Next, when information such as numeric characters or the like is displayed using the emitted light of the light-reflecting plate 68, the liquid crystal panel 8 is set to the ON state. Thereupon, as shown by the arrow D, linearly polarised light in the direction parallel to the plane of the drawing is taken out of the emitted light of the light-reflecting plate 68 by the polarisation separation film 12, and the linearly polarised light is transmitted by the liquid crystal panel 8 in the ON state, and is further transmitted by the first polariser 11 to be displayed to the outside. Since the colour of information such as numeric characters or the like displayed at this time is determined by the colour of the emitted light of the light-reflecting plate 68, if the colour of the emitted light is set to a colour such as yellow green, red, or orange-colour, which is easily identified with respect to the "black", the information such as numeric characters can be viewed in a very easy-to-identify state. Incidentally, the colour of the emitted light is set by, for example, providing a colour filter.

As described above, according to this embodiment, if the external environment becomes dark, the light-reflecting plate 68 acts as the illuminant, so that information such as numeric characters or the like is displayed in a colour, such as yellow green and the like, on the black background colour. This display is continued until the energy accumulated in the light-accumulative luminescent layer of the light-reflecting plate 68 is used up.

As described above, according to the wristwatch of this embodiment, even if the watch is placed under a dark environment such as night-time, the display surface of the watch can be displayed brightly based on the emitted light from the light-accumulative luminescent layer of the light-reflecting plate 68. Further, the light-accumulative luminescent layer does not require a specific power source and its own thickness is thin, so that the wristwatch can be formed in small size at a low cost.

In addition, according to the wristwatch of this embodiment, the black information display is effected on a white ground when the external natural light is employed (the arrow P and the arrow Q), while the information display by the colour of the emitted light such as yellow green is effected on a black ground when emission characteristics of the light-reflecting plate 68 are employed (the arrow C and the arrow D).

In some arrangements either the case where the external natural light is used or the case where the emission function of the light-reflecting plate 68 is employed, the display form is such that only the black information display is effected on the white ground. Thus, when compared to this, the display form of this embodiment is a very novel such that the display colour of information such as numeric characters or the like is reversed between yellow green or other specific colour and black standard colour, so that the viewer's interest can be strongly attracted.

In addition, although a liquid crystal panel using the TN liquid crystal is employed as the transmitted polarisation axis variable means capable of selecting one of the states of changing and non-changing the polarisation axis of the transmitted polarised light in the above-described embodiments, a liquid crystal panel using the STN liquid crystal or the ECB liquid crystal can be employed in place of this.

In addition, although a multilayer structure in which a plurality of thin films are laminated as shown in Fig. 2 is employed as the second polarisation separation means in the embodiment of Fig. 20, (1) a polarisation separation plate having a structure such that a (1/4) λ film is provided on both sides or one side of cholesteric liquid crystal layer, (2) a polarisation separation member (pages 427 to 429 of SID 92 DIGEST) having a structure for separating into reflected polarised light and transmitted polarised light utilising Brewster angle, or (3) a polarisation separation member utilising hologram may be employed in place of this.

(Ninth Embodiment)

The electronic watch according to claim 1 to be described below is characterised in that a liquid crystal display device having a structure such that a plurality of, for example, two polarisation separation means are arranged on one side of the transmitted polarisation axis variable means such as a liquid crystal panel or the like. Now, before describing the embodiment of the electronic watch, the structure and the operation of such a liquid crystal display device will be described.

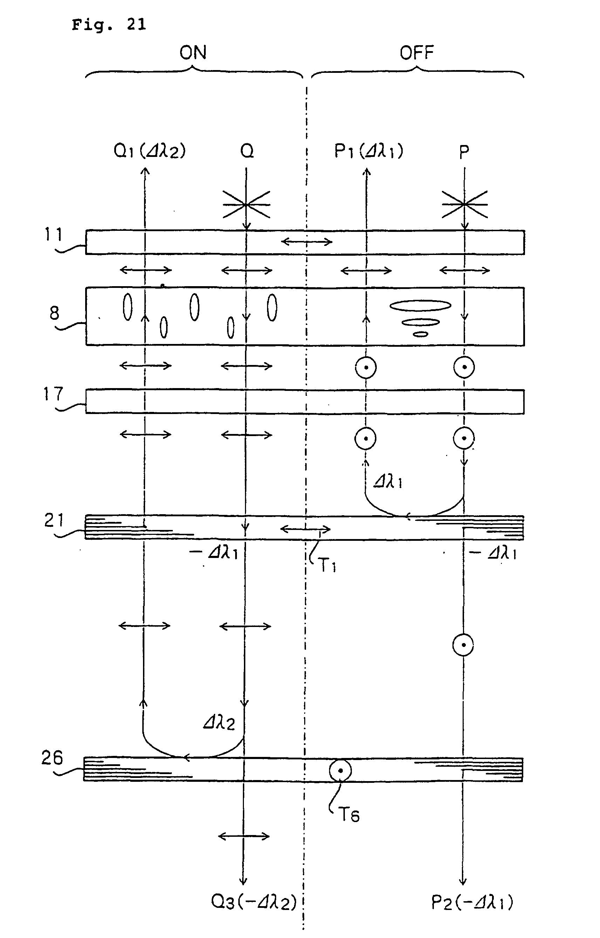

Fig. 21 schematically shows a liquid crystal display device having a structure such that two polarisation separators are arranged on one side of the transmitted polarisation axis variable means. Incidentally, the liquid crystal display device shown in this drawing only shows an example of the structure, and the liquid crystal display device is not limited to the structure. In this liquid crystal display device, the TN liquid crystal 8 is used as the transmitted polarisation axis variable element. The polariser 11 is provided on the upper side of the TN liquid crystal 8. On the lower side of the TN liquid crystal 8, the light-scattering layer 17, a polarisation separator 21, and a polarisation separator 26 are provided in this order.

The polarisation separator 21 reflects light which is the light in the direction of the reflection axis and in a certain wavelength region ($\Delta\lambda_1$) and transmits light which is the light in the direction of the reflection axis and in other wavelength region (-$\Delta\lambda_1$). In addition, the polarisation separator 26 reflects light which is the light in the direction of the reflection axis and in a certain wavelength region ($\Delta\lambda_2$) different from $\Delta\lambda_1$, and transmits light which is the light in the direction of the reflection axis and in other wavelength region (-$\Delta\lambda_2$). An angle formed by the transmission axis $T_1$ of the polarisation separator 21 and the transmission axis T6 of the polarisation separator 26 is 90°.

In Fig. 21, when the left side of the liquid crystal display device is taken as an ON-voltage application section and the right side of the same is taken as an OFF-voltage application section, on the OFF-voltage application section, light P is converted by the polariser 11 into linearly polarised light in the direction parallel to the plane of the drawing, and thereafter, the polarisation direction is twisted 90° by the TN liquid crystal to become linearly polarised light in the direction perpendicular to the plane of the drawing, light in the wavelength region ($\Delta\lambda_1$) is reflected and light in the wavelength region (-$\Delta\lambda_1$) is transmitted by the polariser 21. The reflected light in the wavelength region ($\Delta\lambda_1$) becomes linearly polarised light in the direction perpendicular to the plane of the drawing, and the polarisation direction is twisted 90° by the TN liquid crystal 8 to become linearly polarised light in the direction parallel to the plane of the drawing, and is emitted from the polariser 11 as linearly polarised light in the direction parallel to the plane of the drawing. That is, a colour of the wavelength region ($\Delta\lambda_1$) can be viewed.

On the other hand, the transmitted light in the wavelength region (-$\Delta\lambda_1$) becomes linearly polarised light in the direction perpendicular to the plane of the drawing to be transmitted by the polarisation separator 26. That is, a colour of the wavelength region (-$\Delta\lambda_1$) can be viewed. In this way, when the OFF-voltage is applied, the incident light is not absorbed by the polarisation separator 21 but reflected therefrom as viewed from the side of the incident light, so that colour display of a bright wavelength region ($\Delta\lambda_1$) can be obtained. Incidentally, since the light-scattering layer 17 is provided between the polarisation separator 21 and the TN liquid crystal 8, the reflected light from the polarisation separator 21 is changed from the form of a mirror surface to the form of a diffused surface. In addition, as viewed from the side opposite to the side of the incident light, display of the wavelength region (-$\Delta\lambda_1$) of the incident light can be obtained by the polarisation separator 21 and the polarisation separator 26.

On the ON-voltage application section of the left side of the liquid crystal display device shown in Fig. 21, the light Q is converted by the polariser 11 into linearly polarised light in the direction parallel to the plane of the drawing and is transmitted by the TN liquid crystal 8 without changing the polarisation direction and thereafter, converted by the polarisation separator 21 into linearly polarised light in the direction parallel to the plane of the drawing. The linearly polarised light emitted from the polarisation separator 21 is incident on the polarisation separator 26, and of the incident linearly polarised light, light in the wavelength region ($\Delta\lambda_2$) is reflected from the polarisation separator 26 and light in the wavelength region (-$\Delta\lambda_2$) is transmitted by the polarisation separator 26.

The light in the wavelength region ($\Delta\lambda_2$) reflected from the polarisation separator 26 is transmitted by the TN liquid crystal 8 as the linearly polarised light in the direction parallel to the plane of the drawing without changing the polarisation direction, and is emitted from the polariser 11 as linearly polarised light in the direction parallel to the plane of the drawing. That is, a colour of

the wavelength region $(\Delta\lambda_2)$ can be viewed. On the other hand, at the back of the polarisation separator 26, a colour of the wavelength region $(-\Delta\lambda_2)$ can be viewed by the transmitted light in the wavelength region $(-\Delta\lambda_2)$.

In this way, as viewed from the side of the incident light, on the OFF-voltage application section, the light reflected by the polarisation separator 21 becomes emitted light $P_1$ of the colour in the wavelength region $(\Delta\lambda_1)$, while on the ON-voltage application section, the light transmitted by the polarisation separator 26 is reflected by the polarisation separator 26 to become the emitted light $Q_1$ of the colour in the wavelength region $(\Delta\lambda_2)$. Therefore, as viewed from the side of the incident light, colour display of the wavelength region $(\Delta\lambda_2)$ can be obtained on the colour background of the wavelength region $(\Delta\lambda_1)$.

In addition, as viewed from the side opposite to the side of the incident light, on the OFF-voltage application section, the light transmitted by the polarisation separator 21 becomes emitted light $P_2$ of the colour in the wavelength region $(-\Delta\lambda_1)$, and on the ON-voltage application section, the light transmitted by the polarisation separator 21 is also transmitted by the polarisation separator 26 to become emitted light $Q_3$ of the colour in the wavelength region $(-\Delta\lambda_2)$. Therefore, as viewed from the side opposite to the side of the incident light, colour display of the wavelength region $(-\Delta\lambda_2)$ can be obtained on the colour background of the wavelength region $(-\Delta\lambda_1)$.

Incidentally, although a description is given taking the TN liquid crystal 8 as an example in the above description, the basic operating principle is equal even if the STN liquid crystal, the ECB (Electrically Controlled Birefringence) liquid crystal or the like, which is a component capable of changing the transmitted polarisation axis by a voltage or the like, is used in place of the TN liquid crystal 8.

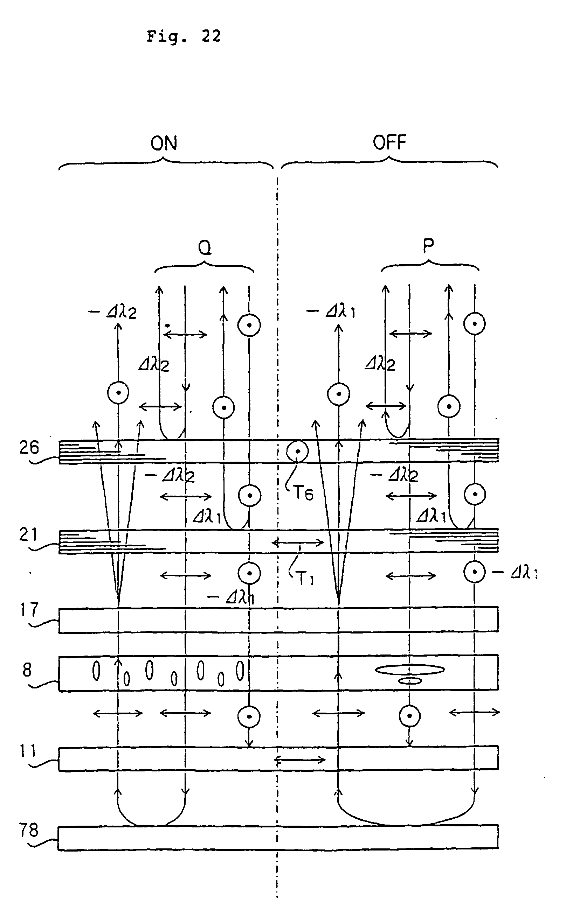

Fig. 22 schematically shows another example of the liquid crystal display device using the polarisation separator 21 of Fig. 25. In this liquid crystal display device, the TN liquid crystal 8 is used as the transmitted polarisation axis variable element. The polariser 11 and the reflecting plate 78 are provided on the lower side of the TN liquid crystal 8. The light-scattering layer 17, the polarisation separator 21 and the polarisation separator 26 are provided on the upper side of the TN liquid crystal 8 in this order.

The polarisation separator 21 reflects light which is the light in the direction of the reflection axis and in a certain wavelength region $(\Delta\lambda_1)$ and transmits light which is the light in the direction of the reflection axis and in other wavelength region $(-\Delta\lambda_1)$. In addition, the polarisation separator 26 reflects light which is the light in the direction of the reflection axis and in a certain wavelength region $(\Delta\lambda_2)$ different from $\Delta\lambda_1$, and transmits light which is the light in the direction of the reflection axis and in other wavelength region $(-\Delta\lambda_2)$. An angle formed by the transmission axis $T_1$ of the polarisation separator 21 and the transmission axis T6 of the polarisation separator 26 is 90°.

On the OFF-voltage application section of the right side of Fig. 22, of the light P, light, which is in the direction perpendicular to the transmission axis $T_6$ of the polarisation separator 26 and which is in the wavelength region $(-\Delta\lambda_2)$, is transmitted by the polarisation separator 26 as linearly polarised light. The transmitted light is changed by the polarisation separator 21 to linearly polarised light in the direction parallel to the plane of the drawing and is transmitted thereby. The polarisation direction of this transmitted light is twisted 90° by the TN liquid crystal 8 to become linearly polarised light in the direction perpendicular to the plane of the drawing, and is absorbed by the polariser 11.

On the other hand, of the light P, light in the direction parallel to the transmission axis $T_6$ of the polarisation separator 26 is transmitted by the polarisation separator 26 as linearly polarised light. The light, which is transmitted and in the wavelength region $(-\Delta\lambda_1)$, is changed by the polarisation separator 21 to linearly polarised light in the direction perpendicular to the plane of the drawing, and is transmitted thereby. The polarisation direction of this transmitted light is twisted 90° by the TN liquid crystal 8 to become linearly polarised light in the direction parallel to the plane of the drawing, and is transmitted by the polariser 11 and reflected by the reflecting plate 78. This reflected light passes through the polariser 11, the TN liquid crystal 8, the polarisation separator 21 and the polarisation separator 26 again. In the middle of passing, the light is diffused by the light-scattering layer 17 and therefore, a colour of the wavelength region $(-\Delta\lambda_1)$ can be viewed in a wide visual angle.

While on the ON-voltage application section, of the light Q, light, which is in the direction perpendicular to the transmission axis T6 of the polarisation separator 26 and in the wavelength region $(-\Delta\lambda_2)$, is transmitted by the polarisation separator 26 as the linearly polarised light. The transmitted light is changed by the polarisation separator 21 to linearly polarised light in the direction parallel to the plane of the drawing and is transmitted thereby. This transmitted light becomes linearly polarised light in the direction parallel to the plane of the drawing without the change of the polarisation direction by the TN liquid crystal 8, and is transmitted by the polariser 11 and reflected from the reflecting plate 78. This reflected light passing through the polariser 11, the TN liquid crystal 8, the polarisation separator 21 and the polarisation separator 26 again. In the middle of passing, the light is diffused by the light-scattering layer 17 and therefore, a colour in the wavelength region $(-\Delta\lambda_2)$ can be viewed in a wide visual angle.

On the other hand, of the light Q, light in the direction parallel to the transmission axis $T_6$ of the polarisation separator 26 is transmitted by the polarisation separator 26 as linearly polarised light. The light, which is transmitted and in the wavelength region $(-\Delta\lambda_1)$, is changed by the polarisation separator 21 to linearly polarised light in the direction perpendicular to the plane of the drawing, and is transmitted thereby. The transmitted light becomes linearly polarised light without the change of the polarisation direction by the TN liquid crystal 8, and is absorbed by the polariser 11.

In this way, on the OFF-voltage application section, a colour in the wavelength region ($-\Delta\lambda_1$) can be viewed, and a colour in the wavelength region ($-\Delta\lambda_2$) can be viewed on the ON-voltage application section.

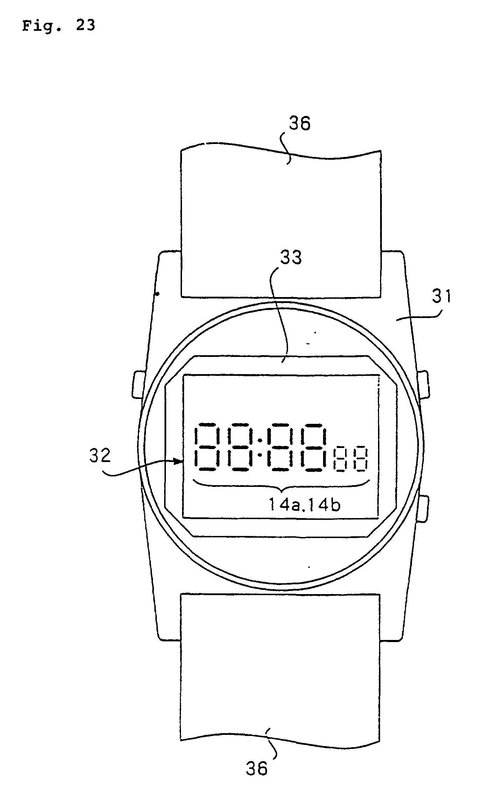

Fig. 23 shows an embodiment of the electronic watch according to claim 1. This electronic watch is composed of a casing 31, a movement 32 stored in the casing 31, a glass plate 33 for use in covering which is fixed to the casing 31 and located on the movement 32, and a wristband 36 fitted to the casing 31. Since the cross-sectional configuration of this electronic watch is the same as the configuration shown in Fig. 4, a description thereof will be omitted.

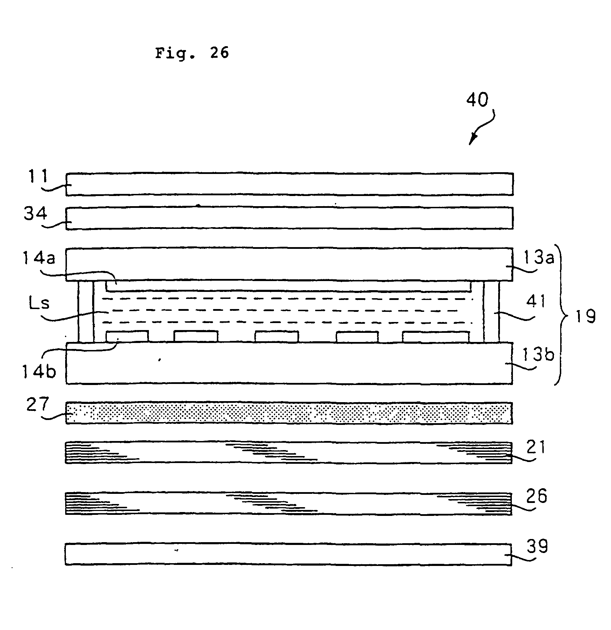

The movement 32 is composed of, as shown in Fig. 24, a panel frame 37, a liquid crystal display device 40 supported by the panel frame 37, a circuit substrate 35 and the battery 9. The liquid crystal display device 40 uses, as shown in Fig. 26, the STN liquid crystal panel 19 as the transmitted polarisation axis variable means. A retardation film 34 and the polariser 11 are provided on the upper side of the STN liquid crystal panel 19 in this order. A diffusing plate 27, the polarisation separator 21, the polarisation separator 26 and a light absorber 39 are provided on the lower side of the STN liquid crystal panel 19 in this order.

As the polarisation separator 21 and the polarisation separator 26, the polarisation separators which are described using Fig. 25 are used. However, the polarisation separator 21 is the polarisation separator for holding the above expression (1) regarding only a specific wavelength region ($\Delta\lambda_3$) in the visible light, transmitting linearly polarised light in the Y direction as the linearly polarised light in the Y direction, reflecting light in the wavelength region ($\Delta\lambda_3$) of linearly polarised light in the X direction as the linearly polarised light in the X direction, and transmitting light in the wavelength region ($-\Delta\lambda_3$) other than the wavelength region ($\Delta\lambda_3$) of linearly polarised light in the X direction as the linearly polarised light in the X direction.

In addition, the polarisation separator 26 is the polarisation separator for holding the above expression (1) regarding only a specific wavelength region ($\Delta\lambda_4$) in the visible light, transmitting linearly polarised light in the Y direction as the linearly polarised light in the Y direction, reflecting light in the wavelength region ($\Delta\lambda_4$) of linearly polarised light in the X direction as the linearly polarised light in the X direction, and transmitting light in the wavelength region ($-\Delta\lambda_4$) other than the wavelength region ($\Delta\lambda_4$) of linearly polarised light in the X direction as the linearly polarised light in the X direction. Incidentally, an angle formed by the transmission axis of the polarisation separator 21 and the transmission axis of the polarisation separator 26 is 90°.

In the STN liquid crystal panel 19, the STN liquid crystal $L_S$ is sealed in a cell formed by two sheets of the glass substrates 13a and 13b and a sealing member 41. The transparent electrode 14a is provided on the lower surface of the glass substrate 13a, and the transparent electrode 14b is provided on the upper surface of the glass substrate 13b. As the transparent electrodes 14a and 14b, ITO (Indium Tin Oxide) and stannic oxide can be used.

In the case of this embodiment, these transparent electrodes 14a and 14b are formed, as shown in Fig. 23, as a watch displaying pattern in a state where a one-digit numeric character formed by seven segments is arranged in six digits. By selectively changing some of the segments in colour, various numeric characters for displaying a time are displayed. Of course, all information except the numeric characters can be displayed, but it will be omitted in the following description.

In Fig. 26, the retardation film 34 is used as a colour compensating optical anisotropic body, and is used to correct colouring caused in the STN liquid crystal panel 19. In addition, the light absorber 39 is a black film.

Hereinafter, the operation of the electronic watch constructed as described above will be described. First, on the OFF-voltage application region, natural light becomes linearly polarised light in a predetermined direction due to the action of the polariser 11 and thereafter, becomes linearly polarised light of which polarisation direction is twisted at a predetermined angle by the STN liquid crystal panel 19, and the light in the wavelength region ($\Delta\lambda_3$) is reflected by the polarisation separator 21 without being absorbed thereby, the polarisation direction is twisted at a predetermined angle by the STN liquid crystal panel 19, and then emitted from the polariser 11 as linearly polarised light.

In addition, the light in the wavelength region ($-\Delta\lambda_3$) is transmitted by the polarisation separator 21 and the polarisation separator 26, and is absorbed by the light absorber 39. In this way, when the OFF-voltage is applied, the light is not absorbed but reflected by the polarisation separator 21, so that a bright display colour can be obtained regarding the wavelength region ($\Delta\lambda_3$). Incidentally, since the diffusing plate 27 is provided between the STN liquid crystal panel 19 and the polarisation separator 21, the reflected light from the polarisation separator 21 is not changed into the form of mirror surface.

On the other hand, on the ON-voltage application region, the natural light is changed to linearly polarised light in a predetermined direction by the action of the polariser 11 and thereafter, transmitted by the STN liquid crystal panel 19 and the diffusing plate 27 as linearly polarised light, and is also transmitted by the polarisation separator 21 as linearly polarised light. Of the transmitted linearly polarised light, light in the wavelength ($\Delta\lambda_4$) is reflected by the polarisation separator 26 and the reflected light is transmitted by the polarisation separator 21, the diffusing plate 27, the STN liquid crystal panel 19 and the polariser 11 to be emitted as linearly polarised light. In addition, light in the wavelength region $(-\Delta\lambda_4)$ is transmitted by the polarisation separator 26 to be absorbed by the light absorber 39.

In this way, when the ON-voltage is applied, the light is not absorbed but reflected by the polarisation separator 21 and the polarisation separator 26, so that a bright display colour regarding the wavelength region $(\Delta\lambda_4)$ can be obtained. Incidentally, since the diffusing plate 27 is provided between the STN liquid crystal panel 19 and the polarisation separator 21, the reflected light from the polarisation separator 21 is not changed into the form of mirror surface. According to the foregoing description, the display colour of the wavelength region $(\Delta\lambda_3)$ and the display colour of the wavelength region $(\Delta\lambda_4)$ can be switched.

(Tenth Embodiment)

In the above-described ninth embodiment (Fig. 26), if the angle formed by the polarisation axes of the polarisation separator 21 and the polarisation separator 26 is taken as θ, the θ is 90° in the above-described tenth embodiment. When the angle θ is changed sequentially, the colour contrast becomes better as the angle θ increases from 0°. When the angle θ becomes 45°, a practical level is obtained, a display state is fairly improved when the angle θ becomes 60°, and further, a high-level colour purity is obtained when the angle θ becomes 90°.

Preferably, the angle formed by said second direction and said fourth direction is 45° to 90°. More preferably, the angle formed by said second direction and said fourth direction is 60° to 90°. Most preferably, the angle formed by said second direction and said fourth direction is 75° to 90°.

(Eleventh Embodiment)

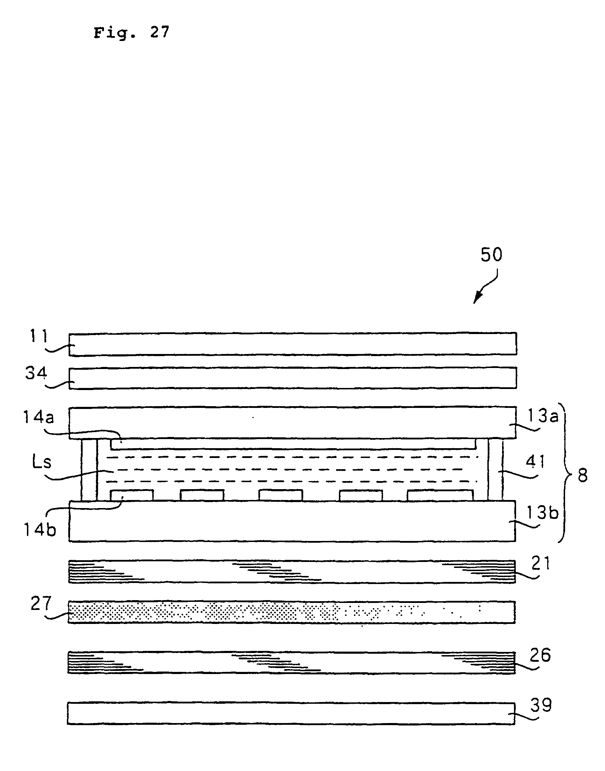

Fig. 27 shows another embodiment of a major part used in the electronic watch according to claim 1, especially, a liquid crystal display device. A liquid crystal display device 50 differs from the liquid crystal display device 40 shown in Fig. 26 in that the diffusing plate 27 is provided between the polarisation separator 21 and the polarisation separator 26. In this embodiment, the wavelength region $(\Delta\lambda_3)$ of the polarisation separator 21 was taken as yellow, and the wavelength region $(\Delta\lambda_4)$ of the polarisation separator 26 was taken as blue. Thereupon, blue display and display of metallic shiny yellow, i.e., gold could be changed.

(Twelfth Embodiment)

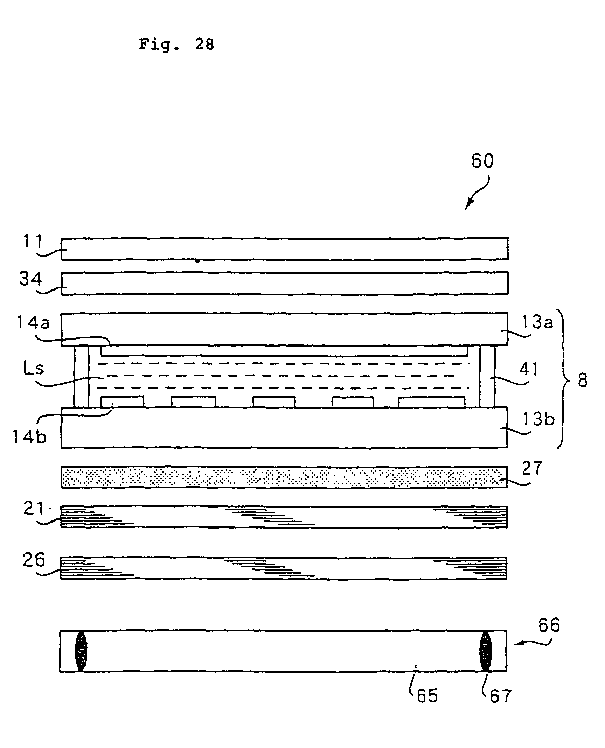

Fig. 28 shows a further embodiment of a major part used in the electronic watch according to claim 1, especially, a liquid crystal display device. A liquid crystal display device 60 differs from the liquid crystal display device 40 shown in Fig. 26 in that a light source 66 is provided in place of the light absorber 39. The light source 66 uses an LED (light Emitting Diode) 67, and guides the light emitted from the LED 67 with a light guide 65 to emit to the outside from the top surface thereof.

Under external light, similar to the embodiment of Fig. 26, the display colour of the wavelength region $(\Delta\lambda_3)$ and the display colour of the wavelength region $(\Delta\lambda_4)$ can be switched. In addition, under illumination of the light source 66, the light incident on the polarisation separator 26 is transmitted by the polarisation separator 26 and the polarisation separator 21, whereby linearly polarised light in the wavelength region $(-\Delta\lambda_3)$ and linearly polarised light in the wavelength region $(-\Delta\lambda_4)$ can be obtained and they are intersecting at right angles. By switching the polarisation state of these linearly polarised light with the use of the STN liquid crystal 8, the display colour of the wavelength region $(-\Delta\lambda_3)$ and the display colour of the wavelength region $(-\Delta\lambda_4)$ can be switched.

(Thirteenth Embodiment)

In the embodiment shown in Fig. 27, the retardation film 34 was omitted. Thereupon, a brighter blue display and gold display could be obtained.

According to the electronic watch wherein a polarisation separation component for effecting action of transmitting linearly polarised light in one direction and reflecting linearly polarised light other than the above polarised light is employed as the second polarisation separation means in place of a normal polariser, so that both information such as numeric characters or the like and the background colour can be displayed in a remarkably bright and easy-to-see state.

In addition, the pattern, such as a logo, a mark, a character or the like is provided on the reflecting layer, so that the background in the display surface can be varied as compared with a conventional background of a single colour with no pattern, thereby providing various information to the viewer, or strongly attracting the viewer's interest.

A polarisation separation component for effecting action of transmitting linearly polarised light in one direction and reflecting linearly polarised light other than the above polarised light is employed as the second polarisation separation means in place of a normal polariser, so that both information such as numeric characters or the like and the background colour can be displayed in a remarkably bright and easy-to-see state.

In addition, the reflected light from the light-reflecting layer arranged on the back of the second polarisation separation means can be sufficiently guided to the outside without being attenuated, so that a variety of backgrounds can be clearly definitely recognised if the light-reflecting layer is contrived. In particular, according to the present invention, the light-reflecting layer is formed by a sheet material of which visually recognised condition is changed in accordance with a viewing angle, so that various backgrounds and so forth can be viewed every time the viewer changes the viewing angle, and hence, the viewer can enjoy a variety of watch display and so forth as compared with a conventional background of a single colour with no pattern.

Even if the electronic watch is placed under a dark environment such as night-time, the display surface of the watch can be displayed brightly to the outside utilising emitted light from the light-accumulative luminescent layer of the light-reflecting member. Moreover, since the light-accumulative luminescent layer does not require a specific power source and its own thickness is thin, the electronic watch can be manufactured in small size at a low cost.

According to the electronic watch as claimed in claim 1, two display states of the first display state and the second display state can be obtained in response to the state of the transmitted polarisation axis used for displaying information such as numeric characters or the like. Since the display colour of the first state and the display colour of the second state differ from each other, the watch display can be effected by the two colours. In addition, since both of the display states are the display states due to the light reflected from the polarisation separation means, the remarkably bright watch display can be obtained as compared with a conventional display element of a type for transmitting two sheets of polarisers.

**Claims**

1. An electronic watch for counting and displaying time, comprising:

   polarisation changing means (8) capable of variably changing the polarisation direction of transmitted light;
   a first polarisation separation means (11) and a second polarisation separation means (21) placed on opposite sides of the polarisation changing means (8); and
   a third polarisation separation means (26) placed on the opposite side of the second polarisation separation means (21) from said polarisation changing means (8);

   wherein said first polarisation separation means (11) has first and second surfaces and can transmit light linearly polarised in a first direction and incident on the first surface to the second surface, and which can transmit light linearly polarised in the first direction and incident on the second surface to the first surface;
   wherein said second polarisation separation means (21) has third and fourth surfaces and can transmit light linearly polarised in a second direction and incident on the third surface to the fourth surface; and reflect light linearly polarised in a third direction perpendicular to said second direction and having a wavelength in a first wavelength region and incident on the third surface; and transmit light linearly polarised in said third direction and having a wavelength in a second wavelength region and incident on the third surface to the fourth surface;

   wherein the third polarisation separation means (26) has fifth and sixth surfaces and can transmit light linearly polarised in a fourth direction and incident on the fifth surface to the sixth surface; and reflect light linearly polarised in a fifth direction perpendicular to the fourth direction and having a wavelength in a third wavelength region and incident on the fifth surface; and transmit light linearly polarised in the fifth direction and having a wavelength in a fourth wavelength region and incident on the fifth surface to the sixth surface;

   wherein the third and fourth directions are parrallel; and

   wherein either the third surface is adjacent to the polarization changing means (8) and the fifth surface is adjacent to the second polarization seperation means (21), or the fourth surfaces is adjacent to the polarization changing means (8) and the sixth surface is adjacent to the second polarization seperation means (21).

2. An electronic watch according to claim 1, wherein said polarization changing means (8) includes a liquid crystal display device.

3. An electronic watch according to claim 2, wherein said liquid crystal display device is a TN liquid crystal device, an STN liquid crystal device, or an ECB liquid crystal device.

4. An electronic watch according to one of claims 1 to 3, wherein said first polarisation separation means (11) includes a polariser.

5. An electronic watch according to one of claims 1 to 4, wherein an angle formed by said second direction and said fourth direction is 45° to 90°.

6. An electronic watch according to one of claims 1 to 4, wherein an angle formed by said second direction and said fourth direction is 60° to 90°.

7. An electronic watch according to one of claims 1 to 4, wherein an angle formed by said second direction and said fourth direction is 75° to 90°.

8. An electronic watch according to one of claims 1 to 7, further comprising light-diffusing means.

9. An electronic watch according to one of claims 1 to 8, further comprising light-absorbing means.

10. An electronic watch according to one of claims 1 to 8, further comprising a light source.

11. An electronic watch according to one of claims 1 to 10, wherein said second polarisation separation means (21) is a laminated product in which a plurality of layers are laminated by being adhered to each other, and a refractive index of said plurality of layers is equal in a sixth direction between layers adjacent to each other, and is different in a seventh direction perpendicular to the sixth direction.

12. An electronic watch according to one of claims 1 to 11, wherein said third polarisation separation means (26) is a laminated product in which a plurality of layers are laminated by being adhered to each other, and a refractive index of said plurality of layers is equal in an eighth direction between layers adjacent to each other, and is different in a ninth direction perpendicular to the eighth direction.

**Patentansprüche**

1. Elektronische Uhr zum Zählen und Anzeigen der Zeit, umfassend:

ein Polarisationsänderungsmittel (8), das in der Lage ist, die Polarisationsrichtung von durchgelassenem Licht variabel zu ändern;
ein erstes Polarisationstrennmittel (11) und ein zweites Polarisationstrennmittel (21), die an entgegengesetzten Seiten des Polarisationsänderungsmittels (8) angeordnet sind; und
ein drittes Polarisationstrennmittel (26), das auf der von dem Polarisationsänderungsmittel (8) entgegengesetzten Seite des zweiten Polarisationstrennmittels (21) angeordnet ist;

worin das erste Polarisationstrennmittel (11) erste und zweite Oberflächen aufweist und Licht, das in einer ersten Richtung linear polarisiert ist und auf die erste Oberfläche fällt, zu der zweiten Oberfläche durchlassen kann, und Licht, das in der ersten Richtung linear polarisiert ist und auf die zweite Oberfläche fällt, zu der ersten Oberfläche durchlassen kann;
worin das zweite Polarisationstrennmittel (21) dritte und vierte Oberflächen aufweist und Licht, das in einer zweiten Richtung linear polarisiert ist und auf die dritte Oberfläche fällt, zu der vierten Oberfläche durchlassen kann; und Licht, das in einer dritten Richtung orthgonal zu der zweiten Richtung linear polarisiert ist und eine Wellenlänge in einem ersten Wellenlängenbereich aufweist und auf die dritte Oberfläche fällt, reflektieren kann; und Licht, das in der dritten Richtung linear polarisiert ist und eine Wellenlänge in einem zweiten Wellenlängenbereich aufweist und auf die dritte Oberfläche fällt, zu der vierten Oberfläche durchlassen kann;

worin das dritte Polarisationstrennmittel (26) fünfte und sechste Oberflächen aufweist und Licht, das in einer vierten Richtung linear polarisiert ist und auf die fünfte Oberfläche fällt, zu der sechsten Oberfläche durchlassen kann; und Licht, das in einer fünften Richtung orthogonal zu der vierten Richtung linear polarisiert ist und eine Wellenlänge in einem dritten Wellenlängenbereich hat und auf die fünfte Oberfläche fällt, reflektieren kann; und Licht, das in der fünften Richtung linear polarisiert ist und eine Wellenlänge in einem vierten Wellenlängenbereich hat und auf die fünfte Oberfläche fällt, zu der sechsten Oberfläche durchlassen kann;

worin die dritten und vierten Richtungen parallel sind; und

worin entweder die dritte Oberfläche dem Polarisationsänderungsmittel (8) benachbart ist und die fünfte Oberfläche dem zweiten Polarisationstrennmittel (21) benachbart ist, oder die vierte Oberfläche dem Polarisationsänderungsmittel (8) benachbart ist und die sechste Oberfläche dem zweiten Polarisationstrennmittel (21) benachbart ist.

2. Elektronische Uhr nach Anspruch 1, worin das Polarisationsänderungsmittel (8) eine Flüssigkristallanzeigevorrichtung enthält.

3. Elektronische Uhr nach Anspruch 2, worin die Flüssigkristallanzeigevorrichtung eine TN-Flüssigkristallvorrichtung, eine STN-Flüssigkristallvorrichtung oder eine ECB-Flüssigkristallvorrichtung ist.

4. Elektronische Uhr nach einem der Ansprüche 1 bis 3, worin das erste Polarisationstrennmittel (11) einen Polarisator enthält.

5. Elektronische Uhr nach einem der Ansprüche 1 bis 4, worin der durch die zweite Richtung und die vierte Richtung gebildete Winkel 45° bis 90° beträgt.

6. Elektronische Uhr nach einem der Ansprüche 1 bis 4, worin der durch die zweite Richtung und die vierte Richtung gebildete Winkel 60° bis 90° beträgt.

7. Elektronische Uhr nach einem der Ansprüche 1 bis 4, worin der durch die zweite Richtung und die vierte Richtung gebildete Winkel 75° bis 90° beträgt.

8. Elektronische Uhr nach einem der Ansprüche 1 bis 7, die femer ein Lichtdiffusormittel aufweist.

9. Elektronische Uhr nach einem der Ansprüche 1 bis 8, die femer ein Lichtabsorptionsmittel aufweist.

10. Elektronische Uhr nach einem der Ansprüche 1 bis 8, die femer eine Lichtquelle aufweist.

11. Elektronische Uhr nach einem der Ansprüche 1 bis 10, worin das zweite Polarisationstrennmittel (21) ein laminiertes Produkt ist, in dem eine Mehrzahl von Schichten durch Aneinanderkleben laminiert sind, und ein Brechungsindex der Mehrzahl von Schichten in einer sechsten Richtung zwischen einander benachbarten Schichten gleich ist und in einer siebten Richtung orthogonal zu der sechsten Richtung unterschiedlich ist.

12. Elektronische Uhr nach einem der Ansprüche 1 bis 11, worin das dritte Polarisationstrennmittel (26) ein laminiertes Produkt ist, in dem eine Mehrzahl von Schichten durch Aneinanderkleben laminiert sind, und ein Brechungsindex der Mehrzahl von Schichten in einer achten Richtung zwischen einander benachbarten Schichten gleich ist und in einer neunten Richtung orthogonal zu der achten Richtung unterschiedlich ist.

**Revendications**

1. Montre électronique pour compter et afficher le temps, comprenant :

un moyen de changement de polarisation (8) capable de changer de façon variable la direction de polarisation de la lumière transmise ;
un premier moyen de séparation de polarisation (11) et un deuxième moyen de séparation de polarisation (21) placés sur les côtés opposés du moyen de changement de polarisation (8) ; et
un troisième moyen de séparation de polarisation (26) placé sur le côté opposé du deuxième moyen de séparation de polarisation (21) à partir dudit moyen de changement de polarisation (8) ;

dans laquelle ledit premier moyen de séparation de polarisation (11) a une première et une deuxième surfaces et peut transmettre la lumière polarisée de façon linéaire dans une première direction et incidente sur la première surface vers la deuxième surface, et qui peut transmettre la lumière polarisée linéairement dans la première direction et incidente sur la deuxième surface vers la première surface ;
dans laquelle ledit deuxième moyen de séparation de polarisation (21) a une troisième et une quatrième surfaces et peut transmettre la lumière polarisée de façon linéaire dans une deuxième direction et incidente sur la troisième surface vers la quatrième surface ; et refléter la lumière polarisée de façon linéaire dans une troisième direction perpendiculaire à ladite deuxième direction et ayant une longueur d'onde dans une première région de longueur d'onde et incidente sur la troisième surface ; et transmettre la lumière polarisée de façon linéaire dans ladite troisième direction et ayant une longueur d'onde dans une deuxième région de longueur d'onde et incidente sur ladite troisième surface vers la quatrième surface ;

dans laquelle le troisième moyen de séparation de polarisation (26) a une cinquième et une sixième surfaces et peut transmettre la lumière polarisée de façon linéaire dans une quatrième direction et incidente sur la cinquième surface vers la sixième surface ; et refléter la lumière polarisée de façon linéaire dans une cinquième direction perpendiculaire à la quatrième direction et ayant une longueur d'onde dans une troisième région de longueur d'onde et incidente sur la cinquième surface ; et transmettre la lumière polarisée de façon linéaire dans la cinquième direction et ayant une longueur d'onde dans une quatrième région de longueur d'onde et incidente sur la cinquième surface vers la sixième surface ;

dans laquelle la troisième et la quatrième directions sont parallèles ; et

dans laquelle soit la troisième surface est adjacente au moyen de changement de polarisation (8) et la cinquième surface est adjacente au deuxième moyen de séparation de polarisation (21), soit la quatrième surface est adjacente au moyen de changement de polarisation (8) et la sixième surface est adjacente au deuxième moyen de séparation de polarisation (21).

2. Montre électronique selon la revendication 1, dans laquelle ledit moyen de changement de polarisation (8) comprend un dispositif d'affichage à cristaux liquides.

3. Montre électronique selon la revendication 2, dans laquelle ledit dispositif d'affichage à cristaux liquides est un dispositif d'affichage à cristaux liquides à nématique en hélice "TN", un dispositif d'affichage à cristaux liquides à matrice passive à simple balayage "STN"ou un dispositif d'affichage à cristaux liquides à biréfringence contrôlée électriquement "ECB".

4. Montre électronique selon l'une quelconque des revendications 1 à 3, dans laquelle ledit premier moyen de séparation de polarisation (11) comprend un polarisateur.

5. Montre électronique selon l'une quelconque des revendications 1 à 4, dans laquelle un angle formé par ladite deuxième direction et ladite quatrième direction est de 45° à 90°.

6. Montre électronique selon l'une quelconque des revendications 1 à 4, dans laquelle un angle formé par ladite deuxième direction et ladite quatrième direction est de 60° à 90°.

7. Montre électronique selon l'une quelconque des revendications 1 à 4, dans laquelle un angle formé par ladite deuxième direction et ladite quatrième direction est de 75° à 90°.

8. Montre électronique selon l'une quelconque des revendications 1 à 7, comprenant en outre un moyen diffuseur de lumière.

9. Montre électronique selon l'une quelconque des revendications 1 à 8, comprenant en outre un moyen absorbant la lumière.

10. Montre électronique selon l'une quelconque des revendications 1 à 8, comprenant en outre une source de lumière.

11. Montre électronique selon l'une quelconque des revendications 1 à 10, dans laquelle ledit deuxième moyen de séparation de polarisation (21) est un produit laminé dans lequel une pluralité de couches sont laminées en adhérant les unes aux autres, et un indice de réfraction de ladite pluralité de couches est égal dans une sixième direction entre les couches adjacentes les unes aux autres, et est différent dans une septième direction perpendiculaire à la sixième direction.

12. Montre électronique selon l'une quelconque des revendications 1 à 11, dans laquelle ledit troisième moyen de séparation de polarisation (26) est un produit laminé dans lequel une pluralité de couches sont laminées en adhérant les unes aux autres, et un indice de réfraction de ladite pluralité de couches est égal dans une huitième direction entre des couches adjacentes les unes aux autres, et est différent dans une neuvième direction perpendiculaire à la huitième direction.

Fig. 1

Fig. 2

Fig. 3

Fig. 4

Fig. 5

Fig. 6

Fig. 7

Fig. 8

Fig. 9

Fig. 10

ON(NUMERIC CHARACTERS)    OFF (BACKGROUND)

REFLECTION COLOR
OF LIGHT-REFLECTING
LAYER 18a
P

(EMISSION COLOR)

REFLECTION IMAGE OF
POLARIZATION SEPARA-
TION FILM 12
Q

(BLACK)    11

13a
L    8
13b

ON = STRAIGHT
OFF = TWIST

12

⊙ REFLECTION

↔ TRANSMISSION

20 (PATTERN)

18    18a (LIGHT-REFLECTING LAYER)

EP 0 890 866 B1

Fig. 11

27

Fig. 12

ON·(NUMERIC CHARACTERS)        OFF·(BACKGROUND)

REFLECTION COLOR OF
POLARIZATION SEPARA-
TION FILM 12

REFLECTION IMAGE
OF LIGHT-REFLECTING
PLATE 18

11

ON = STRAIGHT
OFF = TWIST

13a
L
13b
8

12

⊙  REFLECTION

↔  TRANSMISSION

28(LIGHT-REFLECTING PLATE)

Fig. 13

Fig. 14

Fig. 15

Fig. 16

Fig. 17

Fig. 18

Fig. 19

Fig. 20

Fig. 21

Fig. 22

Fig. 23

**Fig. 24**

**Fig. 25**

Fig. 26

Fig. 27

Fig. 28

Fig. 29

OFF (BACKGROUND)

ON (NUMERIC CHARACTERS)

REFLECTION IMAGE OF
REFLECTING PLATE
104

P

(BLACK)
Q

102

101

ON = STRAIGHT
OFF = TWIST

103

104